(19) **Europäisches Patentamt / European Patent Office / Office européen des brevets**

(11) **EP 4 543 719 B1**

(12) **EUROPEAN PATENT SPECIFICATION**

(45) Date of publication and mention
of the grant of the patent:
**22.07.2026 Bulletin 2026/30**

(21) Application number: **22738590.3**

(22) Date of filing: **23.06.2022**

(51) International Patent Classification (IPC):
*B60T 8/17* *(2006.01)*          *B60T 8/1755* *(2006.01)*

(52) Cooperative Patent Classification (CPC):
**B60T 8/1708; B60T 8/1755;** B60T 2201/04;
B60T 2230/06

(86) International application number:
**PCT/EP2022/067204**

(87) International publication number:
**WO 2023/247045 (28.12.2023 Gazette 2023/52)**

(54) **A METHOD FOR DETERMINING A TRACTOR LONGITUDINAL FORCE THRESHOLD VALUE**

VERFAHREN ZUR BESTIMMUNG EINES LÄNGSKRAFTSCHWELLENWERTS EINES TRAKTORS

PROCÉDÉ DE DÉTERMINATION D'UNE VALEUR SEUIL DE FORCE LONGITUDINALE DE
TRACTEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.04.2025 Bulletin 2025/18**

(73) Proprietor: **VOLVO TRUCK CORPORATION**
**405 08 Göteborg (SE)**

(72) Inventors:
 • **HANSSON, Johan**
  **411 31 Göteborg (SE)**
 • **MÖLLER, Daniel**
  **416 81 Göteborg (SE)**
 • **LAINE, Leo**
  **438 94 Härryda (SE)**
 • **GELSO, Esteban**
  **421 51 Göteborg (SE)**
 • **HJELTE ULMEHAG, Robert**
  **418 76 Göteborg (SE)**

 • **FREDRIKSSON, Jonas**
  **431 40 Mölndal (SE)**

(74) Representative: **Valea AB**
 **Box 1098**
 **405 23 Göteborg (SE)**

(56) References cited:
EP-A1- 0 374 484          WO-A1-2013/004315
WO-A1-2022/106004      JP-A- H10 119 739
US-A- 5 411 322            US-A- 5 558 350

 • EHLERS SIMON F G ET AL: "State and Parameter
Estimation in a Semitrailer for Different Loading
Conditions Only Based on Trailer Signals", 2022
AMERICAN CONTROL CONFERENCE (ACC),
AMERICAN AUTOMATIC CONTROL COUNCIL, 8
June 2022 (2022-06-08), pages 2353 - 2360,
XP034180299, DOI: 10.23919/
ACC53348.2022.9867797

**Description**

TECHNICAL FIELD

The invention relates to a method for determining a tractor longitudinal force threshold value for a tractor longitudinal retardation force that can be imparted on a tractor of a vehicle combination comprising the tractor and a trailer for retarding the vehicle combination. Moreover, the invention relates to a method for braking a vehicle combination comprising a tractor and a trailer. Additionally, the invention relates to each one of a computer program, a computer readable medium, a control unit and a vehicle combination.

The invention can be applied in heavy-duty vehicles, such as trucks, buses and construction equipment. Although the invention will be described with respect to a vehicle combination comprising a truck, the invention is not restricted to this particular vehicle combination but may also be used for vehicle combinations comprising other vehicles, such as working machines, buses or the like.

BACKGROUND

A vehicle combination generally comprises a tractor and a trailer. The tractor may comprise a tractor brake assembly and the trailer may comprise a trailer brake assembly in order to ensure that the vehicle combination can be appropriately braked.

It may be desired to brake the vehicle combination by operating the tractor brake assembly but not the trailer brake assembly for braking the vehicle combination. For instance, the tractor may comprise a tractor brake assembly for regenerative braking of the tractor and it may be desired to employ regenerative braking for the tractor solely in order to ensure that a relatively large amount of energy is regenerated when retardation of the vehicle combination is requested.

As another non-limiting example, it may be desired to use only service brakes of the tractor brake assembly when braking the vehicle combination in order to ensure that the trailer brake assembly may be inactive and thereby for instance appropriately cooled. However, braking a vehicle combination by operating only the tractor brake assembly may be associated with certain challenges, such as an increased risk for jack-knifing or swinging out of the trailer.

As may be realized from the above, it would be desirable to gain information indicative of under which conditions a vehicle combination can be braked solely by the tractor.

According to its abstract, WO 2022/106004 A1 relates to a method for controlling motion of a heavy-duty vehicle, comprising obtaining information related to an upcoming vehicle path and vehicle maneuver along the path, obtaining information related to a road friction coefficient along the upcoming vehicle path, configuring lateral and longitudinal wheel slip limits for at least two wheels of an axle or lumped group-axle on the heavy-duty vehicle, wherein lateral and longitudinal wheel slip values are related to respective lateral and longitudinal tyre force values via a pre-determined combined tyre slip model, determining a vehicle motion profile for performing the vehicle maneuver along the path as a solution to a non-linear optimal control problem, NOCP, wherein the NOCP is constrained by the lateral and longitudinal wheel slip limits and formulated to account for the road friction coefficient and/or curvature along the upcoming vehicle path, and controlling the motion of the heavy-duty vehicle along the path based on the determined target vehicle motion profile.

According to its abstract, US 5411322 A relates to optimum braking effectiveness and control of a vehicle are obtained by continually evaluating estimated values of friction coefficients as they increase with decreasing vehicle velocity during vehicle braking and by increasing brake pressure accordingly to maintain the pressure just under a value at which vehicle control is compromised. This is enhanced by determining a maximum pressure that can be applied to each brake sight while maintaining the rate of change of the articulation angle between a tractor and trailer of the vehicle equal to zero. A further enhancement is obtained by estimating critical vehicle velocity as a function of steering angle, thus enabling braking effectiveness and control to be a function of maneuvering conditions.

SUMMARY

An object according to a first aspect of the present invention is to provide a method that can provide useful information relating to the braking of a vehicle combination.

The object is achieved by a method according to claim 1.

As such, a first aspect of the present invention relates to a method for determining a tractor longitudinal force threshold value for a tractor longitudinal retardation force that can be imparted on a tractor of a vehicle combination comprising the tractor and a trailer for retarding the vehicle combination.

The trailer has a trailer longitudinal extension in a trailer longitudinal direction, a trailer lateral extension in a trailer lateral direction and a trailer vertical extension in a trailer vertical direction, wherein the trailer longitudinal direction corresponds to an intended direction of travel of the trailer when the vehicle combination is travelling straight ahead, the trailer vertical direction corresponds to a direction of a normal to a planar surface supporting the trailer and the trailer lateral direction being perpendicular to each one of the trailer longitudinal direction and the trailer vertical direction.

The tractor has a tractor longitudinal extension in a tractor longitudinal direction, a tractor lateral extension in a tractor lateral direction and a tractor vertical extension in a tractor vertical direction, wherein the tractor longitudinal direction corresponds to an intended direction of travel of the tractor when the vehicle combination is travelling straight ahead, the tractor vertical direction corresponds to a direction of a normal to a planar surface supporting the tractor and the tractor lateral direction being perpendicular to each one of the tractor longitudinal direction and the tractor vertical direction, wherein the tractor longitudinal retardation force extends in a direction parallel to the tractor longitudinal direction. The tractor comprises a set of tractor wheels adapted to engage the ground supporting the tractor, each wheel of the set of tractor wheels comprising a tire.

The method comprises:

- determining a tractor lateral force value, indicative of a tractor lateral force being or predicted to be imparted on the tractor, using a tractor lateral force value determination procedure comprising:

    - obtaining a trailer mass value indicative of the current mass of the trailer;
    - obtaining a trailer operating value indicative of the current or predicted operating condition of the trailer;
    - determining an articulation angle value indicative of a current articulation angle between the tractor longitudinal direction and the trailer longitudinal direction, and
    - determining the tractor lateral force value using the trailer mass value, the trailer operating value and the articulation angle value;

- determining a tractor tire lateral force limit value using a tire model for determining a tire lateral force limit, taking at least one characteristic of the tire into account, for each wheel of at least a subset of the set of tractor wheels;

- determining a reference lateral force value using the tractor lateral force value and the tractor tire lateral force limit value;

- determining a horizontal friction force value indicative of a possible total horizontal frictional force obtainable between the ground supporting the tractor and the set of tractor wheels, and

- determining the tractor longitudinal force threshold value using the reference lateral force value and the horizontal friction force value.

The above method implies that the tractor longitudinal force threshold value can be determined with an appropriately high level of safety and accuracy since the reference lateral force value can be determined taking two entities, viz the tractor lateral force value and the tractor tire lateral force limit value, into account.

Optionally, each wheel of the set of tractor wheels has a wheel longitudinal direction being parallel to the tractor longitudinal direction when the vehicle combination is travelling straight ahead, as well as a wheel transversal direction being parallel to the tractor transversal direction when the vehicle combination is travelling straight ahead, wherein the feature of determining the tractor tire lateral force limit value comprises the following for each wheel of at least a subset of the set of tractor wheels:

- determining a wheel longitudinal velocity value indicative of a velocity in the wheel longitudinal direction of the wheel,
- determining a wheel transversal velocity value indicative of a velocity in the wheel transversal direction of the wheel,
- determining a sliding threshold value, indicative of a sliding threshold above which the wheel is expected to slide relative to the ground supporting the tractor, and
- using the wheel longitudinal velocity value, the wheel transversal velocity value and the sliding threshold value for determining a wheel specific tractor tire lateral force limit value portion forming part of the tractor tire lateral force limit value.

Optionally, wherein the wheel has a wheel vertical direction being perpendicular to each one of the wheel longitudinal direction and the wheel transversal direction and the feature of determining the sliding threshold value comprises using at least the following:

- a contact value proportional to a distance, in the wheel longitudinal direction, along which contact between the wheel and the ground supporting the tractor is determined to be established;
- a stiffness value indicative of a stiffness coefficient of the tire of the wheel;
- a vertical force value indicative of a force, in the tractor vertical direction, imparted on the wheel, and

- a friction value indicative of the friction between the wheel and the ground supporting the tractor.

Optionally, the feature of determining the tractor tire lateral force limit value further comprises the following for each wheel of at least a subset of the set of tractor wheels:

- determining a longitudinal slip value, indicative of a slip in the wheel longitudinal direction, using the wheel longitudinal velocity value and a product obtained by multiplying the effective rolling radius of the wheel by an angular velocity value indicative of a current angular velocity of the wheel.

As used herein, the term "effective rolling radius" relates to the ratio of the linear velocity of the wheel centre in the wheel longitudinal direction to the angular velocity of the wheel when no slipping occurs. Generally, the effective rolling radius is between the forced height of the wheel, viz the smallest distance in the tractor vertical direction from the ground to the centre of the wheel, and the geometric radius of the wheel. The effective rolling radius can be determined in a plurality of ways, e.g. by determining the above-mentioned ratio of the linear velocity of the wheel centre in the wheel longitudinal direction to the angular velocity of the wheel when no slipping occurs during different driving conditions. Alternatively, the effective rolling radius can be determined by determining a tire contact angle, i.e. the top angle of a triangle connecting the wheel centre and each one of a rearmost and forwardmost contact points between the tire and the ground supporting the tire and combining such a tire contact angle with the geometric radius of the wheel.

Optionally, the feature of determining the tractor tire lateral force limit value further comprises the following for each wheel of at least a subset of the set of tractor wheels:

- determining a slip angle value using the wheel longitudinal velocity value and the wheel transversal velocity value, preferably by dividing the wheel transversal velocity value by the wheel longitudinal velocity value, more preferred by calculating the arctangent for an argument corresponding to the ratio between the wheel transversal velocity value and the wheel longitudinal velocity value multiplied by minus one.

Optionally, the feature of determining the reference lateral force value using the tractor lateral force value and the tractor tire lateral force limit value comprises setting the reference lateral force to equal the one of the tractor lateral force value and the tractor tire lateral force limit value having the largest absolute value.

Optionally, the tractor lateral force value determination procedure further comprises:

- obtaining a longitudinal trailer inclination angle value indicative of the inclination angle, in the trailer longitudinal direction, of the ground supporting the trailer;
- determining a longitudinal gravity force value indicative of a longitudinal gravity force, in the trailer longitudinal direction, imparted on the trailer on the basis of at least the trailer mass value and the longitudinal trailer inclination angle value, and
- determining the tractor lateral force value using the longitudinal gravity force value

The use of the above-mentioned longitudinal trailer inclination angle value implies that the tractor lateral force value may be determined with an appropriately high level of accuracy.

Optionally, the tractor lateral force value determination procedure further comprises:

- obtaining a longitudinal trailer retardation value indicative of a longitudinal trailer retardation being or predicted to be imparted on the trailer;
- determining a longitudinal inertial force value indicative of a longitudinal inertial force, in the trailer lateral direction, imparted on the trailer on the basis of at least the trailer mass value and the longitudinal trailer retardation value, and
- determining the tractor lateral force value using the longitudinal inertial force value.

The use of the above-mentioned longitudinal trailer retardation value implies that the tractor lateral force value may be determined with an appropriately high level of accuracy.

Optionally, the tractor lateral force value determination procedure further comprises:

- determining a lateral centrifugal force value indicative of a centrifugal force, in the trailer lateral direction, imparted on the trailer on the basis of at least the trailer mass value, and
- determining the tractor lateral force value using the lateral centrifugal force value.

Optionally, the tractor lateral force value determination procedure further comprises:

- obtaining a lateral inclination angle value indicative of the inclination angle, in the trailer lateral direction, of the ground supporting the trailer;
- determining a lateral gravity force value indicative of a lateral gravity force, in the trailer lateral direction, imparted on the trailer on the basis of at least the trailer mass value and the lateral inclination angle value, and
- determining the tractor lateral force value using the lateral gravity force value.

Optionally, the tractor lateral force value determination procedure further comprises:

- multiplying each force value indicative of a force, in the trailer longitudinal direction, with the sine of the articulation angle value.

Optionally, the tractor lateral force value determination procedure further comprises:

- multiplying each force value indicative of a force, in the trailer lateral direction, with the cosine of the articulation angle value.

Optionally, the tractor comprises a set of wheel axles. The set of wheel axles comprises at least one wheel axle and each wheel axle is connected to individual wheels of the set of tractor wheels. The method comprises performing the following for each wheel axle in the set of wheel axles:

- on the basis of the trailer lateral force value, determining a trailer axle lateral force value indicative of a trailer lateral force being or predicted to be imparted on the wheel axle;

- determining a tractor axle lateral force limit value using a tire model for determining a tire lateral force limit, taking at least one characteristic of the tire into account, for at least one, preferably each of, the wheel or wheels connected to the wheel axle;

- determining a reference axle lateral force value using the trailer axle lateral force value and the tractor axle lateral force limit value;

- determining a horizontal axle friction force value indicative of a possible total horizontal frictional force obtainable between the ground supporting the tractor and at least one, preferably each of, the wheel or wheels connected to the wheel axle;

- determining a tractor axle longitudinal force threshold value using the reference axle lateral force value and the horizontal axle friction force value, and

summarizing the axle tractor longitudinal force threshold value for each wheel axle in the set of wheel axles in order to obtain the tractor longitudinal force threshold value.

Optionally, the step of determining the trailer axle lateral force value indicative of a trailer lateral force being or predicted to be imparted on the wheel axle on the basis of the trailer lateral force value comprises using a moment equilibrium equation using the following inputs:

- the trailer lateral force value;
- a distance, in the tractor longitudinal direction, from each wheel axle to the centre of gravity of the tractor, and
- a distance, in the tractor longitudinal direction, from the connection point to the centre of gravity of the tractor.

Optionally, the method comprises performing the following for at least a plurality, preferably for each one, of the wheels of the set of tractor wheels:

- on the basis of the trailer lateral force value, determining a trailer wheel lateral force value indicative of a trailer lateral force being or predicted to be imparted on the wheel;

- determining a tractor wheel lateral force limit value using a tire model for determining a tire lateral force limit, taking at least one characteristic of the tire into account, for the wheel;

- determining a reference wheel lateral force value using the trailer wheel lateral force value and the tractor wheel lateral force limit value;

- determining a horizontal wheel friction force value indicative of a possible total horizontal frictional force obtainable between the ground supporting the tractor and at least one, preferably each of, the wheel or wheels connected to the wheel;

- determining a tractor wheel longitudinal force threshold value using the reference wheel lateral force value and the horizontal wheel friction force value, and

summarizing the wheel tractor longitudinal force threshold value for each wheel in the set of wheel wheels in order to obtain the tractor longitudinal force threshold value.

Optionally, the step of determining the trailer wheel lateral force value indicative of a trailer lateral force being or predicted to be imparted on the wheel on the basis of the trailer lateral force value comprises using a moment equilibrium equation using the following inputs:

- the trailer lateral force value;
- a distance, in the tractor longitudinal direction, from each one of a plurality of wheels, preferably from each wheel, in the of the set of tractor wheels to the centre of gravity of the tractor, and
- a distance, in the tractor longitudinal direction, from the connection point to the centre of gravity of the tractor.

A second aspect of the present invention relates to a method for braking a vehicle combination comprising a tractor and a trailer, the tractor comprises a tractor brake assembly for regenerative braking of the tractor and the trailer comprises a trailer brake assembly for braking the trailer, the method comprising:

- determining a tractor longitudinal force threshold value using the method according to any one of the preceding claims:
- operating the tractor brake assembly so as to provide a braking force being smaller than or equal to the tractor longitudinal force threshold value.

Optionally, the method further comprises:

- obtaining a retardation request value indicative of a requested retardation of the vehicle combination;
- determining a requested braking force to be imparted on the vehicle combination on the basis of the retardation request values, and
- in response to the braking force being smaller than or equal to the tractor longitudinal force threshold value, operating the tractor brake assembly but not the trailer brake assembly for braking the vehicle combination.

Optionally, determining a requested braking force to be imparted on the vehicle combination on the basis of the retardation request value further comprises obtaining a tractor mass value indicative of the current mass of the tractor and a trailer mass value indicative of the current mass of the trailer.

Optionally, determining a requested braking force to be imparted on the vehicle combination on the basis of the retardation request value further comprises determining a longitudinal trailer inclination angle value indicative of the inclination angle, in the trailer longitudinal direction, of the ground supporting the trailer.

Optionally, determining a requested braking force to be imparted on the vehicle combination on the basis of the retardation request value further comprises determining a longitudinal tractor inclination angle value indicative of the inclination angle, in the tractor longitudinal direction, of the ground supporting the tractor.

A third aspect of the present invention relates to a computer program comprising program code means for performing the method of any one of the first and second aspects of the present invention when the program is run on a computer.

A fourth aspect of the present invention relates to a computer readable medium carrying a computer program comprising program code means for performing the method of any one of the first and second aspects of the present invention when the program product is run on a computer.

A fifth aspect of the present invention relates to a control unit configured to perform the method of any one of the first and second aspects of the present invention.

A sixth aspect of the present invention relates to a vehicle combination comprising a tractor, a trailer and a control unit according to the fifth aspect of the present invention.

Further advantages and advantageous features of the invention are disclosed in the following description and in the dependent claims.

BRIEF DESCRIPTION OF THE DRAWINGS

With reference to the appended drawings, below follows a more detailed description of embodiments of the invention cited as examples.

In the drawings:

Fig. 1 is a schematic plan view of a vehicle combination;
Fig. 2 is a schematic plan view of a vehicle combination;
Fig. 3a is a schematic plan view of a wheel;

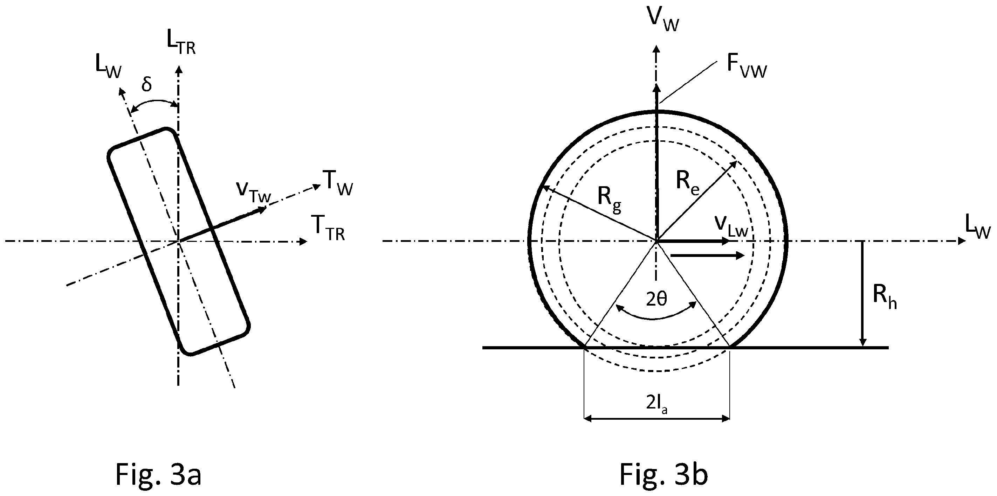

Fig. 3a is a schematic side view of a wheel;

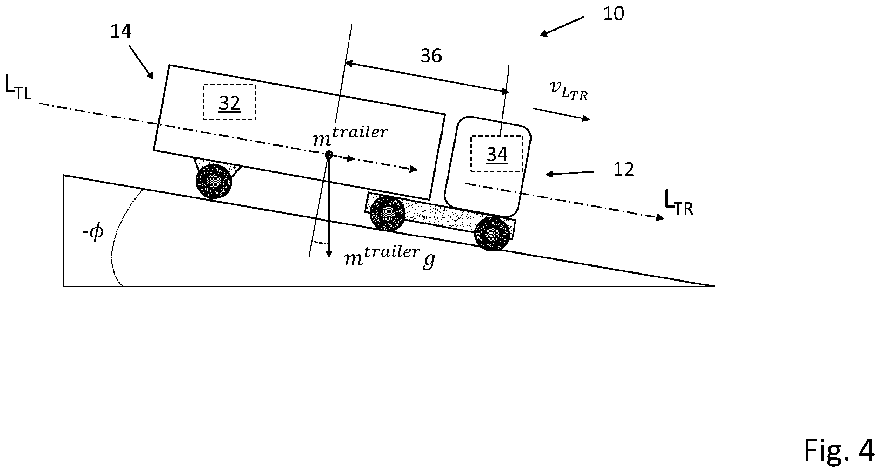

Fig. 4 is a schematic side view of a vehicle combination;

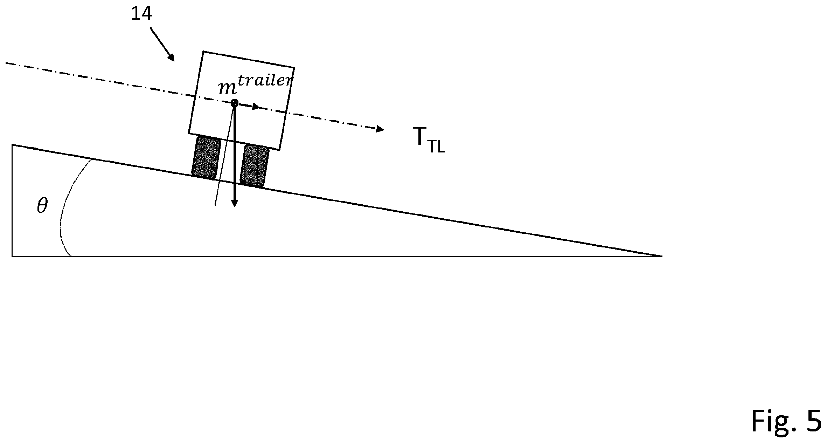

Fig. 5 is a schematic rear view of a vehicle combination, and

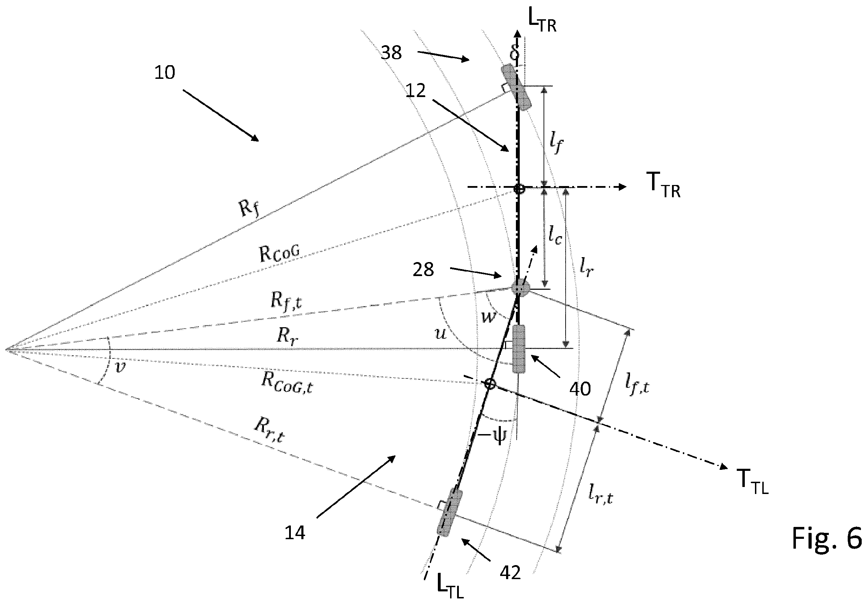

Fig. 6 is a schematic plan view of a vehicle combination.

DETAILED DESCRIPTION OF EXAMPLE EMBODIMENTS OF THE INVENTION

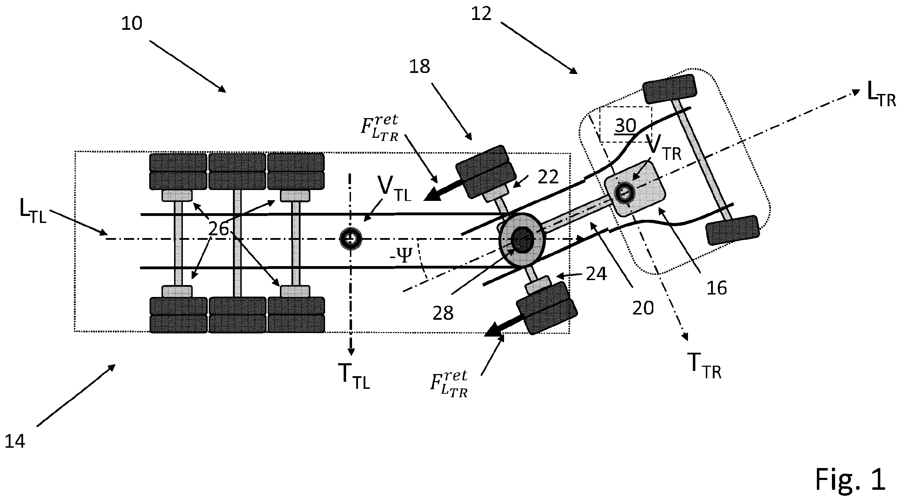

Fig. 1 is a schematic plan view of a vehicle combination 10 comprising a tractor 12 and a trailer 14. Purely by way of example, and as indicated in Fig. 1, the tractor 12 may comprise a propulsion assembly 16 for propelling the tractor 12 and consequently the vehicle combination 10. As a non-limiting example, the propulsion assembly 16 may comprise an electric motor. Moreover, as indicated in Fig. 1, the tractor 12 comprises a set of tractor wheels 18 adapted to engage the ground supporting the tractor 12. Each wheel of the set of tractor wheels 18 comprises a tire. In the Fig. 1 embodiment of the vehicle combination 10, the tractor 12 comprises a pair of double rear wheels and a pair of forward wheels. However, it is of course envisaged that other embodiments of the vehicle combination 10 may comprise a tractor with another implementation of the set of tractor wheels 18.

Moreover, in the Fig. 1 embodiment, the propulsion assembly 16 is connected to the pair of double rear wheels via an arrangement comprising a shaft 20. Moreover, it is also contemplated that the propulsion assembly 16 may comprise one or more electric motors each one of which being arranged at the hub of a wheel, of the tractor 12.

As indicated in Fig. 1, the trailer 14 has a trailer longitudinal extension in a trailer longitudinal direction $L_{TL}$, a trailer lateral extension in a trailer lateral direction $T_{TL}$ and a trailer vertical extension in a trailer vertical direction $V_{TL}$. The trailer longitudinal direction $L_{TL}$ corresponds to an intended direction of travel of the trailer 14 when the vehicle combination 10 is travelling straight ahead, the trailer vertical direction $V_{TL}$ corresponds to a direction of a normal to a planar surface supporting the trailer 14 and the trailer lateral direction $T_{TL}$ is perpendicular to each one of the trailer longitudinal direction $L_{TL}$ and the trailer vertical direction $V_{TL}$.

In a similar vein, and as also indicated in Fig. 1, the tractor 12 has a tractor longitudinal extension in a tractor longitudinal direction $L_{TR}$, a tractor lateral extension in a tractor lateral direction $T_{TR}$ and a tractor vertical extension in a tractor vertical direction $V_{TR}$. The tractor longitudinal direction $L_{TR}$ corresponds to an intended direction of travel of the tractor 12 when the vehicle combination 10 is travelling straight ahead, the tractor vertical direction $V_{TR}$ corresponds to a direction of a normal to a planar surface supporting the tractor 12 and the tractor lateral direction $T_{TR}$ is perpendicular to each one of the tractor longitudinal direction $L_{TR}$ and the tractor vertical direction $V_{TR}$.

Moreover, as indicated in Fig. 1, the tractor 12 may comprise a tractor brake assembly for regenerative braking of the tractor 12. As a non-limiting example, the propulsion assembly 16 may be used for regenerative braking of the tractor 12 and may thus form part of, or even constitute, the tractor brake assembly for regenerative braking of the tractor 12. Thus, when the propulsion assembly 16 is implemented as an electric machine for instance, such an electric machine may function as a generator and generate electric energy to be stored in an electric storage assembly (not shown), such as a battery (not shown). However, it is also contemplated that the tractor brake assembly for regenerative braking of the tractor 12 may comprise, or even be constituted by, one or more electric hub machines 22, 24, each one of which may operate as a generator and generate electric energy to be stored in an electric storage assembly (not shown), such as a battery (not shown).

Moreover, other implementations of the tractor 12 may comprise a tractor brake assembly for braking of the tractor 12 without necessarily having a regeneration capability. For instance, such implementations may comprise one or more service brakes (not shown in Fig. 1).

Irrespective of the implementation the tractor brake assembly is adapted to generate a tractor longitudinal retardation force $F_{LTR}^{ret}$ extending in a direction parallel to the tractor longitudinal direction $L_{TR}$.

Moreover, the trailer 14 may comprise a trailer brake assembly 26 for braking the trailer. The trailer brake assembly 26 may comprise one or more service brakes, one or more electric machines for regenerative braking, or any combination thereof.

Furthermore, as indicated in Fig. 1, the trailer 14 is pivotally connected to the trailer 12 via a connection point 28.

Such a connection point 28 may for instance be implemented as a so called fifth wheel. Thus, the trailer 14 is connected to the tractor 12 such that an articulation angle $\psi$ may be formed between the tractor longitudinal direction $L_{TR}$ and the trailer longitudinal direction $L_{TL}$. Moreover, the above-mentioned articulation angle $\psi$ may vary, preferably in a stepless manner, depending on for instance the operating condition of the vehicle combination 10. The articulation angle $\psi$ is indicated with a minus sign in Fig. 1 thereby implying that a negative articulation angle $\psi$ is assumed in the Fig. 1 condition.

Additionally, Fig. 1 illustrates that the vehicle combination 10 may comprise a control unit 30 configured to perform the method according to the present invention. In the Fig. 1 embodiment, the control unit 30 is located in the tractor 12 although other positions of the control unit 30 are also conceivable.

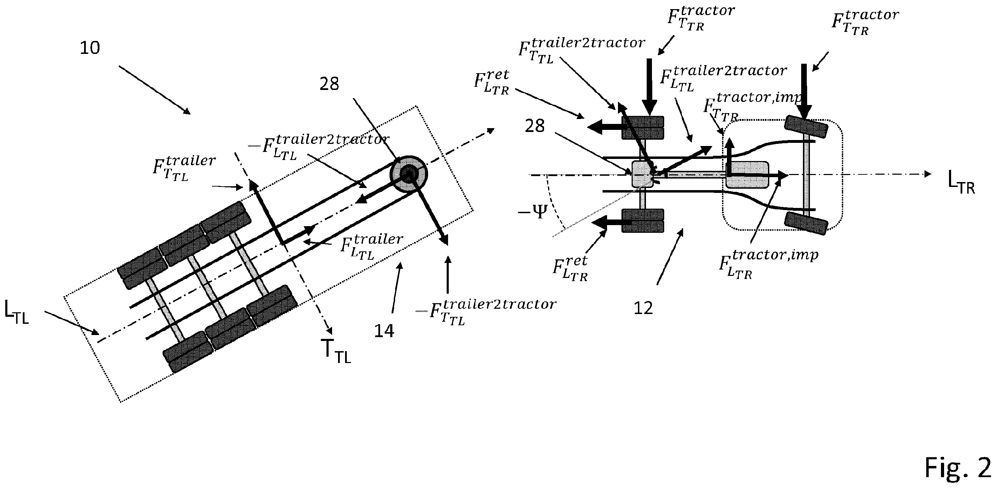

Fig. 2 is a schematic plan view of a vehicle combination 10 being similar to the Fig. 1 vehicle combination 10. In Fig. 2, the trailer 12 and the tractor 14 are illustrated at a distance from each other in order to elucidate the forces acting between the tractor 12 and the trailer 14. However, it should be noted that the coupling forces between the tractor 12 and trailer 14 occur when the trailer 14 is connected to the tractor 12 via the connection point 28.

As may be realized from Fig. 2, during driving of the vehicle combination 10, the trailer will be imparted a trailer longitudinal force $F_{L_{TL}}^{trailer}$, in the trailer longitudinal direction $L_{TL}$, and a trailer lateral force $F_{T_{TL}}^{trailer}$, in the trailer lateral direction $T_{TL}$. Further details of these forces will be presented hereinbelow.

The above-mentioned forces will result in connection forces $F_{L_{TL}}^{trailer2tractor}$, $F_{T_{TL}}^{trailer2tractor}$ in the trailer longitudinal direction $L_{TL}$ and the trailer lateral direction $T_{TL}$, respectively, between the tractor 12 and the trailer 14. It should be noted that the connection forces $F_{L_{TL}}^{trailer2tractor}$, $F_{T_{TL}}^{trailer2tractor}$ need not necessarily fully correspond to the trailer longitudinal force $F_{L_{TL}}^{trailer}$ and the trailer lateral force $F_{T_{TL}}^{trailer}$, respectively. This is since at least a portion of the trailer longitudinal force $F_{L_{TL}}^{trailer}$ and/or the trailer lateral force $F_{T_{TL}}^{trailer}$ may be accommodated by for instance the ground engaging members, such as the wheels, of the trailer 14.

In Fig. 2, the above-mentioned connection forces are presented in relation to the tractor 12 as well as to the trailer 14. Moreover, as indicated in Fig. 2, the connection forces $F_{L_{TL}}^{trailer2tractor}$, $F_{T_{TL}}^{trailer2tractor}$ are related to the trailer longitudinal direction $L_{TL}$ and the trailer lateral direction $T_{TL}$, respectively. Consequently, in order to transform the connection forces $F_{L_{TL}}^{trailer2tractor}$, $F_{T_{TL}}^{trailer2tractor}$ to the tractor longitudinal direction $L_{TR}$ and the tractor lateral direction $T_{TR}$, respectively, the current articulation angle $\Psi$ may be taken into account.

Moreover, a tractor longitudinal retardation force $F_{L_{TR}}^{ret}$ imparted on the tractor 12 is illustrated in Fig. 2. Furthermore, a tractor lateral force $F_{T_{TR}}^{tractor,ground}$, viz a force in the tractor lateral direction $T_{TR}$ imparted on the tractor 12 via the wheels thereof, is indicated in Fig. 2.

The total horizontal forces that can be imparted on the tractor 12 via the set of tractor wheels 18, i.e. from the contact between the wheels and the ground supporting the tractor 12, is limited by a total horizontal frictional force $F_{total}^{tractor}$ that is obtainable between the ground supporting the tractor and the set of tractor wheels 18.

Purely by way of example, the total horizontal frictional force may be determined using the **weight** $F_{V_{TR}}^{tractor}$ of the tractor 12, viz the sum of the forces in the tractor vertical direction $V_{TR}$ imparted on the set of tractor wheels 18 from the ground supporting the tractor. The weight $F_{V_{TR}}^{tractor}$ may be determined by multiplying the total tractor mass $m^{tractor}$ by an acceleration value g corresponding to acceleration due to gravity. Moreover, in order to determine the total horizontal frictional force, a friction value $\mu$, indicative of the friction between the set of tractor wheels 18 and the ground supporting the tractor 12 may be used.

Such a friction value $\mu$ may be determined using any known procedure, such as using a sensor (such as a camera) for monitoring the condition of the ground onto which the tractor 12 is travelling and/or by using a brush model or using a slip value associated with the set of tractor wheels 18.

As such, the total horizontal frictional force $F_{total}^{tractor}$ may be determined in accordance with the following:

$$F_{total}^{tractor} = F_{V_{TR}}^{tractor} \cdot \mu \qquad \qquad \text{Eq. 1}$$

However, it should be noted that the total horizontal frictional force $F_{total}^{tractor}$ may be determined in accordance with other procedures as well. Purely by way of example, if the individual friction value $\mu_i$, indicative of the friction between the one wheel of the tractor 12 and the ground supporting the tractor 12, is taken into account, the total horizontal frictional force $F_{total}^{tractor}$ may be determined in accordance with the following, in which M is the number of wheels in the set of tractor wheels 18:

$$F_{total}^{tractor} = \sum_{i=1}^{M} F_{V_{TR}}^{tractor,i} \cdot \mu_i \qquad \text{Eq. 2}$$

where:

$F_{V_{TR}}^{tractor,i}$ is the force in the tractor vertical direction $V_{TR}$ imparted on the i:th wheel of the set of tractor wheels 18 from the ground supporting the tractor 12, and

$\mu_i$ is a friction value indicative of the friction between the i:th wheel of the set of tractor wheels 18 and the ground supporting the tractor 12.

Purely by way of example, the force in the tractor vertical direction $V_{TR}$ imparted on the i:th wheel of the set of tractor wheels 18 from the ground supporting the tractor 12 may be determined using information from e.g. a wheel suspension arrangement (not shown) of the tractor 12.

As a further alternative, Eq. 3 hereinabove may also be employed for each wheel member axle of the tractor 12.

Irrespective of how the total horizontal frictional force $F_{total}^{tractor}$ is determined, the following condition should be met in order to avoid slipping and/or sliding of the set of tractor wheels 18:

$$(F_{total}^{tractor})^2 = \left(F_{L_{TR}}^{ret}\right)^2 + \left(F_{T_{TR}}^{tractor,ground}\right)^2 \qquad \text{Eq. 3}$$

For the sake of simplicity, Eq. 3 hereinabove relates to the total forces of the tractor 12. However, it should be noted that Eq. 3 can be expanded to wheel axles or even wheels of the tractor 12.

As such, though purely by way of example, Eq. 3 can be expanded to a tractor 12 comprising a set of wheel axles, wherein the set of wheel axles comprises at least one axle and wherein each wheel axle is connected to individual wheels of the tractor 12. Assuming that the tractor comprises N axles, Eq. 3 can be expanded in accordance with the following:

$$\sum_{i=1}^{N}\left(F_{total}^{tractor,i}\right)^2 = \sum_{i=1}^{N}\left(F_{L_{TR}}^{ret,i}\right)^2 + \sum_{i=1}^{N}\left(F_{T_{TR}}^{tractor,ground,i}\right)^2 \qquad \text{Eq. 4}$$

Wherein the index i indicates the i:th wheel axle.

In a similar vein, though purely by way of example, Eq. 3 can be expanded to a tractor 12 to each wheel of the set of tractor wheels 18. Assuming that the set of tractor wheels 18 comprises M wheels, Eq. 3 can be expanded in accordance with the following:

$$\sum_{j=1}^{M}\left(F_{total}^{tractor,j}\right)^2 = \sum_{j=1}^{M}\left(F_{L_{TR}}^{ret,j}\right)^2 + \sum_{j=1}^{M}\left(F_{T_{TR}}^{tractor,ground,j}\right)^2 \qquad \text{Eq. 5}$$

Wherein the index j indicates the j:th wheel.

For the sake of brevity, the below examples are mainly based on Eq. 3 hereinabove. However, it should be noted that the below examples can be expanded in a straightforward manner to each one of Eq. 4 and Eq. 5, respectively.

As such, using Eq. 3 as an example, a maximum value of the tractor longitudinal retardation force $F_{L_{TR}}^{ret,threshold}$, which value hereinafter will be referred to as a tractor longitudinal force threshold value, may be determined in accordance with the following:

$$F_{L_{TR}}^{ret,threshold} = \sqrt{(F_{total}^{tractor})^2 - \left(F_{T_{TR}}^{tractor,ground}\right)^2} \qquad \text{Eq. 6}$$

Again, the total horizontal frictional force $F_{total}^{tractor}$ can for instance be determined in accordance with any one of the procedures mentioned hereinabove.

Although the above determination of the tractor longitudinal force threshold value $F_{L_{TR}}^{ret,threshold}$ is a correct representation of the kinetics of vehicle combination 10, the inventors of the present invention have realized that the tractor longitudinal force threshold value $F_{L_{TR}}^{ret,threshold}$ can be determined in an alternative manner in order to arrive at a tractor longitudinal force threshold value $F_{L_{TR}}^{ret,threshold}$ implying an appropriately safe operation of the vehicle combination 10.

In particular, the inventors have realized that the tractor lateral force $F_{T_{TR}}^{tractor,ground}$ in e.g. Eq. 6 hereinabove may be modified in order to take not only the kinetic conditions of the vehicle combination 10, but also the characteristics of the tires of each wheel of at least a subset of the set of tractor wheels 18, into account. As such, Eq. 6 may be reformulated in accordance with the following:

$$F_{L_{TR}}^{ret,threshold} = \sqrt{\left(F_{total}^{tractor}\right)^2 - \left(F_{T_{TR}}^{tractor,ref}\right)^2} \qquad \text{Eq. 7}$$

wherein

$$F_{T_{TR}}^{tractor,ref} = f\left(F_{T_{TR}}^{tractor}, F_{T_{TR}}^{tire}\right) \qquad \text{Eq. 8}$$

and:

$F_{T_{TR}}^{tractor}$ is a tractor lateral force value indicative of a tractor lateral force being or predicted to be imparted on the tractor 12, and

$F_{T_{TR}}^{tire}$ is a tractor tire lateral force limit value determined taking the characteristics of the tires of each wheel of at least a subset of the set of tractor wheels 18 into account.

Although the invention is presented hereinabove in Eq. 8 is a modification of Eq. 3, it should be noted that similar modifications can of course be made to each one of Eq. 4 and Eq. 5.

As such, the method according to the first aspect of the present invention comprises:

- determining a tractor lateral force value $F_{T_{TR}}^{tractor}$, indicative of a tractor lateral force being or predicted to be imparted on the tractor 12, using a tractor lateral force value determination procedure comprising:

  ○ obtaining a trailer mass value $m^{trailer}$ indicative of the current mass of the trailer 14;
  ○ obtaining a trailer operating value indicative of the current or predicted operating condition of the trailer 14;
  ○ determining an articulation angle value $\Psi$ indicative of a current articulation angle between the tractor longitudinal direction $L_{TR}$ and the trailer longitudinal direction $L_{TL}$, and
  ○ determining the tractor lateral force value $F_{T_{TR}}^{tractor,ground}$ using the trailer mass value $m^{trailer}$, value $\Psi$.

Moreover, the method according to the first aspect of the present invention comprises determining a tractor tire lateral force limit value $F_{T_{TR}}^{tire}$ using a tire model for determining a tire lateral force limit, taking at least one characteristic of the tire into account, for each wheel of at least a subset of the set of tractor wheels 18. Implementations of the tire model will be presented hereinbelow.

Furthermore, the method comprises determining a reference lateral force value $F_{T_{TR}}^{tractor,ref}$ (see Eq. 8 hereinabove) using the tractor lateral force value $F_{T_{TR}}^{tractor}$ and the tractor tire lateral force limit value $F_{T_{TR}}^{tire}$.

Additionally, as has been exemplified hereinabove with reference to each one of Eq. 1 and Eq. 2, the method comprises determining a horizontal friction force value $F_{total}^{tractor}$ indicative of a possible total horizontal frictional force obtainable between the ground supporting the tractor 12 and the set of tractor wheels 18.

Further, the method comprises determining the tractor longitudinal force threshold value $F_{L_{TR}}^{ret,threshold}$ using the reference lateral force value $F_{T_{TR}}^{tractor,ref}$ and the horizontal friction force value $F_{total}^{tractor}$.

The reference lateral force value $F_{T_{TR}}^{tractor,ref}$ may be determined in a plurality of different ways, for instance using any combination of the tractor lateral force value $F_{T_{TR}}^{tractor}$ and the tractor tire lateral force limit value $F_{T_{TR}}^{tire}$ , such as $F_{T_{TR}}^{tractor,ref} = aF_{T_{TR}}^{tractor} + bF_{T_{TR}}^{tire}$ wherein a and b are predetermined coefficients. However, as a non-limiting example, the feature of determining the reference lateral force value $F_{T_{TR}}^{tractor,ref}$ using the tractor lateral force value $F_{T_{TR}}^{tractor}$ and the tractor tire lateral force limit value $F_{T_{TR}}^{tire}$ may comprise setting the reference lateral force $F_{T_{TR}}^{tractor,ref}$ to equal the one of the tractor lateral force value and the tractor tire lateral force limit value having the largest absolute value. As such, the reference lateral force value $F_{T_{TR}}^{tractor,ref}$ may be determined in accordance with the following:

$$F_{T_{TR}}^{tractor,ref} = max\left(\left|F_{T_{TR}}^{tractor}\right|, \left|F_{T_{TR}}^{tire}\right|\right) \qquad \text{Eq. 9}$$

Non-limiting examples of the determination of the tractor tire lateral force limit value $F_{T_{TR}}^{tire}$ will be presented hereinbelow with references to Fig. 3a and Fig. 3b, respectively. Fig. 3a is a plan view and Fig. 3b is a side view of a wheel forming part of the set of tractor wheels 18. It should be noted that the below presentation is applicable for each one of the wheels of the set of tractor wheels 18.

As may be gleaned from Fig. 3a, each wheel of the set of tractor wheels 18 has a wheel longitudinal direction $L_W$ being parallel to the tractor longitudinal direction $L_{TR}$ when the vehicle combination (not shown in Fig. 3a) is travelling straight ahead. In a similar vein, each wheel of the set of tractor wheels 18 has a wheel transversal direction $T_W$ being parallel to the tractor transversal direction $L_{TR}$ when the vehicle combination (not shown in Fig. 3a) is travelling straight ahead. Fig. 3a illustrates an example with a steerable wheel with a steering angle $\delta$ between the wheel longitudinal direction $L_W$ and the tractor longitudinal direction $L_{TR}$. Purely by way of example, the steering angle $\delta$ may be detected by a steering angle sensor (not shown) or by a steering wheel sensor (not shown) detecting the position of a steering wheel (not shown). For non-steerable wheels, the steering angle $\delta$ is constant and may be zero.

As a non-limiting example, the feature of determining the tractor tire lateral force limit value may comprises the following procedure for each wheel of at least a subset of the set of tractor wheels 18:

- determining a wheel longitudinal velocity value $v_{Lw}$ (see Fig. 3b) indicative of a velocity in the wheel longitudinal direction $L_W$ of the wheel;
- determining a wheel transversal velocity value $v_{Tw}$ (see Fig. 3a) indicative of a velocity in the wheel transversal direction $L_W$ of the wheel,
- determining a sliding threshold value $\sigma_{sl}$, which the wheel is expected to slide relative to the ground supporting the tractor 12, and
- using the wheel longitudinal velocity value $v_{Lw}$, the wheel transversal velocity value $v_{Tw}$ and the sliding threshold value $\sigma_{sl}$ for determining a wheel specific tractor tire lateral force limit value portion forming part of the tractor tire lateral force limit value.

An exemplary implementation of the above will be presented hereinbelow. As a non-limiting example, a slip value $\sigma_{LW}$, $\sigma_{TW}$ in each one of the wheel longitudinal direction $L_W$ and the wheel transversal direction $T_W$ may be determined using function that has each one of the wheel longitudinal velocity value $v_{Lw}$ and the wheel transversal velocity value $v_{Tw}$ as inputs, in accordance with the following:

$$\sigma_{LW} = g(v_{LW}, v_{TW}) \text{ and} \qquad \text{Eq. 10}$$

$$\sigma_{TW} = h(v_{LW}, v_{TW}) . \qquad \text{Eq. 11}$$

From the above slip values $\sigma_{LW}$, $\sigma_{TW}$, accordance with the following:

$$\sigma = \sqrt{\sigma_{LW}^2 + \sigma_{TW}^2} . \qquad \text{Eq. 12}$$

Moreover, the above exemplary implementation may use the force $F_{VW}$ in the wheel vertical direction $V_W$ (see Fig. 3b) imparted on the wheel. The wheel vertical direction $V_W$ is perpendicular to each one of the wheel longitudinal direction $L_W$ and the wheel transversal direction $L_W$. Purely by way of example, the wheel vertical direction $V_W$ may be parallel to the tractor vertical direction $V_{TR}$. As a non-limiting example, the force $F_{VW}$ in the wheel vertical direction $V_W$ may be determined using information from e.g. a wheel suspension system (not shown) associated with the wheel.

Using the above information, the maximum forces $F_{LW}$, $F_{TW}$ in the wheel longitudinal direction $L_W$ and the wheel transversal direction $T_W$, respectively, may be determined in accordance with the following:

$$F = \mu F_{VW} \left( 3 \frac{\sigma}{\sigma_{sl}} - 3 \left( \frac{\sigma}{\sigma_{sl}} \right)^2 + \left( \frac{\sigma}{\sigma_{sl}} \right)^3 \right) \quad \text{for } \sigma \leq \sigma_{sl} \qquad \text{Eq. 13}$$

$$F = \mu F_{VW} \qquad \qquad \text{for } \sigma > \sigma_{sl} \qquad \text{Eq. 14}$$

$$F_{LW} = F \frac{\sigma_{LW}}{\sigma_{sl}} \qquad \text{Eq. 15}$$

$$F_{TW} = F \frac{\sigma_{TW}}{\sigma_{sl}} \qquad \text{Eq. 16}$$

The above identified maximum forces $F_{LW}$, $F_{TW}$ in the wheel longitudinal direction $L_W$ and the wheel transversal direction $T_W$, respectively, may thereafter be transformed to the tractor longitudinal direction $L_{TR}$ and the tractor lateral direction $T_{TR}$, respectively, using the steering angle $\delta$ between the wheel longitudinal direction $L_W$ and the tractor longitudinal direction $L_{TR}$. In particular, the tractor tire lateral force limit value $F_{TTR}$ in the tractor lateral direction $T_{TR}$, related to the wheel currently assessed, may be determined in accordance with the following:

$$F_{TTR} = F_{LW} \cdot sin(\delta) + F_{TW} \cdot cos(\delta) \qquad \text{Eq. 17}$$

As may be realized from the above, Eq. 17 is indicative of the tractor tire lateral force limit value $F_{TTR}$ for one wheel of the set of tractor wheels 18. As such, the on order to obtain the total tractor tire lateral force limit value $F_{TTR,total}$ in the tractor lateral direction $T_{TR}$, for each wheel of at least a subset of the set of tractor wheels 18, the following equation can be employed:

$$F_{TTR.total} = \sum_{j=1}^{M} F_{TTR.j} \qquad \text{Eq. 18}$$

Wherein the index j indicates the j:th wheel and M the number of wheels in the subset of the set of tractor wheels 18. As a non-limiting example, the above-mentioned subset may be identical to the set of tractor wheels 18 such that M indicates the number of wheels in the set of tractor wheels 18.

Moreover, as indicated in Fig. 3b, the wheel has a wheel vertical direction $V_W$ being perpendicular to each one of the wheel longitudinal direction $L_W$ and the wheel transversal direction $T_W$. Moreover, though purely by way of example, the feature of determining the sliding threshold value $\sigma_{sl}$ may comprise using at least the following:

- A contact value $l_a$ proportional to a distance, in the wheel longitudinal direction $L_W$, along which contact between the wheel and the ground supporting the tractor 12 is determined to be established. With reference to Fig. 3b, the contact value $l_a$ may as a non-limiting example equal half the above-mentioned distance. However, it is also envisaged that other variants of the contact value $l_a$ may be used.
- A stiffness value $c_p$ indicative of a stiffness coefficient of the tire of the wheel.
- A force value $F_{VW}$ indicative of a force, in the wheel vertical direction $V_W$, imparted on the wheel.
- The previously mentioned friction value $\mu$ indicative of the friction between the wheel and the ground supporting the tractor 12.

Purely by way of example, the above parameters may be used for determining the determining the sliding threshold value $\sigma_{sl}$ in accordance with the following:

$$\sigma_{sl} = \frac{3 \mu F_{VW}}{2 c_p l_a^2} . \qquad \text{Eq. 19}$$

As regards the slip values $\sigma_{LW}$, $\sigma_{TW}$, see Eq. 10 and Eq. 11 hereinabove, these slip values $\sigma_{LW}$, $\sigma_{TW}$ may for instance be determined by a procedure comprising determining a longitudinal slip value $\kappa$, indicative of a slip in the wheel longitudinal direction $L_W$, using the wheel longitudinal velocity value $v_{LW}$ and a product obtained by multiplying the effective

rolling radius $R_e$ of the wheel by an angular velocity value $\omega$ indicative of a current angular velocity of the wheel. Purely by way of example, the longitudinal slip value $\kappa$ may be determined in accordance with the following:

$$\kappa = \frac{R_e\omega - v_{LW}}{max(|R_e\omega|, |v_{LW}|)} \; . \qquad \text{Eq. 20}$$

As used herein, the effective rolling radius $R_e$ relates to the ratio of the linear velocity $v_{LW}$ of the wheel centre in the wheel longitudinal direction to the angular velocity $\omega$ of the wheel when no slipping occurs. The effective rolling radius $R_e$ is indicated in Fig. 3b. As may be gleaned from Fig. 3b, the effective rolling radius $R_e$ is between the forced height $R_h$ of the wheel, viz the smallest distance in the wheel vertical direction $V_W$ from the ground to the centre of the wheel, and the geometric radius $R_g$ of the wheel.

The effective rolling radius $R_e$ can be determined in a plurality of ways, e.g. by determining the above-mentioned ratio of the linear velocity $v_{LW}$ of the wheel centre in the wheel longitudinal direction to the angular velocity $\omega$ of the wheel when no slipping occurs during different driving conditions. Alternatively, the effective rolling radius can be determined by determining a tire contact angle $\theta$, see Fig. 3b, i.e. the top angle of a triangle connecting the wheel centre and each one of a rearmost and forwardmost contact points between the tire and the ground supporting the tire and combining such a tire contact angle with the geometric radius of the wheel.

Moreover, the feature of determining the tractor tire lateral force limit value may further comprise determining a slip angle value $\alpha$ using the wheel longitudinal velocity value $v_{LW}$ and the wheel transversal velocity value $v_{TW}$, preferably by dividing the wheel transversal velocity value $v_{TW}$ by the wheel longitudinal velocity value $v_{LW}$, more preferred by calculating the arctangent for an argument corresponding to the ratio between the wheel transversal velocity value $v_{TW}$ and the wheel longitudinal velocity value $v_{LW}$ multiplied by minus one.

As such, though purely by way of example, the slip angle value $\alpha$ may be determined in accordance with the following:

$$\alpha = arctan\left(-\frac{v_{TW}}{v_{LW}}\right) \; . \qquad \text{Eq. 21}$$

As a non-limiting example, the longitudinal slip value $\kappa$ and the slip angle value $\alpha$ may be used for determining the slip value $\sigma_{LW}, \sigma_{TW}$ in each one of the wheel longitudinal direction $L_w$ and the wheel transversal direction $T_w$ in accordance with the following:

$$\sigma_{LW} = \frac{\kappa}{\kappa + 1} \quad \text{and} \qquad \text{Eq. 22}$$

$$\sigma_{TW} = \frac{tan(\alpha)}{\kappa + 1}. \qquad \text{Eq. 23}$$

The above presentation relates to the determination of the tractor tire lateral force limit value $F_{TTR}$, be it the tractor tire lateral force limit value for one wheel or the total tractor tire lateral force limit value $F_{TTR,total}$.

However, as has been intimated in e.g. Eq. 8 hereinabove, the method according to the present invention also uses a tractor lateral force value $F_{T_{TR}}^{tractor}$ indicative of a tractor lateral force being or predicted to be imparted on the tractor 12. Implementations of features for determining the tractor lateral force value $F_{T_{TR}}^{tractor}$ will be elaborated hereinbelow.

As such, the method of the first aspect of the invention comprises determining a tractor lateral force value $F_{T_{TR}}^{tractor}$, indicative of a tractor lateral force being or predicted to be imparted on the tractor 12, using a tractor lateral force value determination procedure comprising:

- obtaining a trailer mass value $m^{trailer}$ indicative of the current mass of the trailer 14;
- obtaining a trailer operating value indicative of the current or predicted operating condition of the trailer 14;
- determining an articulation angle value $\Psi$ indicative of a current articulation angle between the tractor longitudinal direction $L_{TR}$ and the trailer longitudinal direction $L_{TL}$, and
- determining the tractor lateral force value $F_{T_{TR}}^{tractor}$ using the trailer mass value $m^{trailer}$ the trailer operating value and the articulation angle value $\Psi$.

The above-mentioned procedure comprises obtaining a trailer mass value mass $m^{trailer}$ indicative of the current mass of the trailer 14. Purely by way of example, the trailer mass value mass $m^{trailer}$ may be determined using e.g. information from a ground engaging member suspension system (not shown) of the trailer 14. Instead of, or in addition to using information from a ground engaging member suspension system, information indicative of the dead weight of the trailer as well as the current weight of the cargo carried by the trailer 14 may be used.

Moreover, the above-mentioned tractor lateral force value determination procedure comprises determining an articulation angle value $\Psi$ indicative of a current articulation angle between the tractor longitudinal direction $L_{TR}$ and the trailer longitudinal direction $L_{TL}$. Purely by way of example, the articulation angle value $\Psi$ may be determined using an articulation angle sensor (not shown) of the vehicle combination 10. Purely by way of example, such a sensor may be hosted by the tractor 12. However, it is also envisaged that the articulation angle value $\Psi$ may be determined without the need of an articulation angle sensor. To this end, reference is made to e.g. Eq. 38 hereinbelow.

Moreover, various parameters, as well as combinations of parameters thereof, can be used for the trailer operating value. This will be elaborated on further hereinbelow.

As may be realized from Fig. 2, the tractor lateral force value $F_{T_{TR}}^{tractor}$ is an aggregate of a force $F_{T_{TR}}^{tractor,imp}$ imparted on the tractor 12, in the tractor lateral direction $T_{TR}$, as such as well as the connection forces $F_{L_{TL}}^{trailer2tractor}, F_{T_{TL}}^{trailer2tractor}$ between the tractor 12 and the trailer 14. Purely by way of example, the force $F_{T_{TR}}^{tractor,imp}$ imparted on the tractor 12 as such may be a centrifugal force as will be explained further hereinbelow.

In a similar vein, the connection force $F_{T_{TL}}^{trailer2tractor}$ in the trailer lateral direction $T_{TL}$ may relate to a centrifugal force imparted on the trailer 14. On the other hand, the connection force $F_{L_{TL}}^{trailer2tractor}$ in the trailer longitudinal direction $L_{TL}$ may be related to the mass $m^{trailer}$ of the trailer 14 as well as the longitudinal acceleration of the trailer 14. This will also be elaborated on further hereinbelow.

As has been intimated above, in order to transform the connection forces $F_{L_{TL}}^{trailer2tractor}, F_{T_{TL}}^{trailer2tractor}$ to the tractor lateral direction $T_{TR}$, information indicative of the current articulation angle $\Psi$ can be used in accordance with the following:

$$F_{T_{TR}}^{tractor} = F_{T_{TR}}^{tractor,imp} + F_{T_{TL}}^{trailer2tractor} \cdot cos(\Psi) + F_{L_{TL}}^{trailer2tractor} \cdot sin(\Psi) \qquad \text{Eq. 24}$$

The connection forces $F_{L_{TL}}^{trailer2tractor}, F_{T_{TL}}^{trailer2tractor}$ in the trailer longitudinal direction $L_{TL}$ and the trailer transversal direction $T_{TL}$, respectively, may be transformed to a trailer lateral force value $F_{T_{TR}}^{trailer2tractor}$, indicative of the trailer lateral force being or predicted to be imparted on the tractor in the tractor lateral direction $T_{TR}$, in accordance with the following:

$$F_{T_{TR}}^{trailer2tractor} = F_{T_{TL}}^{trailer2tractor} \cdot cos(\Psi) + F_{L_{TL}}^{trailer2tractor} \cdot sin(\Psi) \qquad \text{Eq. 25}$$

A first example of the trailer operating value may be a longitudinal trailer inclination angle value indicative of the inclination angle, in the trailer longitudinal direction $L_T$, of the ground supporting the trailer 14. To this end, reference is made to Fig. 4 illustrating a vehicle combination 10 travelling on a slope with an inclination angle $-\phi$. As may be realized from Fig. 4, the inclination angle $-\phi$ will result in a gravity force imparted on the trailer 14 in the trailer longitudinal direction $L_{TL}$ and the gravity force will thus form part of the connection force $F_{L_{TL}}^{trailer2tractor}$ in the trailer longitudinal direction $L_{TL}$.

Thus, a first implementation of the above-mentioned tractor lateral force value determination procedure comprises obtaining a longitudinal trailer inclination angle value $\phi$ indicative of the inclination angle, in the trailer longitudinal direction $L_{TL}$, of the ground supporting the trailer 14. The inclination angle value $\phi$ may for instance be determined using an inclination sensor 32 of the trailer 14. Alternatively, the inclination angle value $\phi$ may be determined using information from a map system or the like. As such, using information concerning e.g. the topography of the ground using the map system as well as the current location of the trailer 14, which for instance may be determined using a global positioning system (not shown), the inclination angle value $\phi$ may be determined.

Moreover, the method comprises determining a longitudinal gravity force value $F_{L_{TL}}^{trailer,gravity}$ indicative of a longitudinal gravity force, in the trailer longitudinal direction $L_{TL}$, imparted on the trailer 14 on the basis of at least the trailer mass value $m^{trailer}$ and the longitudinal trailer inclination angle value $\phi$. As a non-limiting example, the longitudinal gravity force value $F_{L_{TL}}^{trailer,gravity}$ may be determined in accordance with the following:

$$F_{L_{TL}}^{trailer,gravity} = g \cdot m^{trailer} \cdot \sin(\phi).$$

Moreover, a first implementation of the above-mentioned tractor lateral force value determination procedure comprises determining the tractor lateral force value $F_{T_{TR}}^{tractor}$ using the longitudinal gravity force value $F_{L_{TL}}^{trailer,gravity}$. Purely by way of example, the above may be determined in accordance with the following:

$$F_{T_{TR}}^{tractor} = F_{L_{TL}}^{trailer,gravity} \cdot \sin(\Psi).$$

Purely by way of example, the trailer lateral force value determination procedure may further comprise obtaining a longitudinal trailer retardation value $r_{L_{TL}}$ indicative of a longitudinal trailer retardation being or predicted to be imparted on the trailer 14. As such, a second example of the trailer operating value may the above-mentioned longitudinal trailer retardation value $r_{L_{TL}}$.

Generally, the longitudinal trailer retardation value $r_{L_{TL}}$ may be negative, thus indicating a requested retardation, i.e. acceleration in a direction opposite to the trailer longitudinal direction $L_{TL}$. Purely by way of example, the longitudinal trailer retardation value $r_{L_{TL}}$ may be determined using a sensor (not shown) such as an accelerometer (not shown) associated with the trailer 14. However, it is also envisaged that the longitudinal trailer retardation value $r_{L_{TL}}$ may be determined in other ways, e.g. using a retardation request signal indicative of a requested retardation of the trailer 14.

Moreover, the trailer lateral force value determination procedure may comprise determining a longitudinal inertial trailer force value $F_{L_{TL}}^{trailer,inertial}$ indicative of a longitudinal inertial force, in the trailer lateral direction $L_{TL}$, imparted on the trailer 14 on the basis of at least the trailer mass value $m^{trailer}$ and the longitudinal trailer retardation value $r_{L_{TL}}$. Purely by way of example, the longitudinal inertial trailer force value $F_{L_{TL}}^{trailer,inertial}$ may be determined in accordance with the following: $F_{L_{TL}}^{trailer,inertial} = r_{L_{TL}} \cdot m^{trailer}$.

As such, though purely by way of example, the longitudinal inertial trailer force value $F_{L_{TL}}^{trailer,inertial}$ and the longitudinal gravity force value $F_{L_{TL}}^{trailer,gravity}$ may be combined in order to form part of, or even constitute, the connection force $F_{L_{TL}}^{trailer2tractor}$ in the trailer longitudinal direction $L_{TL}$ in accordance with the following (see e.g. Eq. 25 hereinabove): $F_{L_{TL}}^{trailer2tractor} = F_{L_{TL}}^{trailer,gravity} + F_{L_{TL}}^{trailer,inertial}$.

Furthermore, though purely by way of example, the trailer lateral force value determination procedure may further comprise:

- determining a lateral centrifugal force value $F_{T_{TL}}^{trailer,centrifugal}$ indicative of a centrifugal force, in the trailer lateral direction $T_{TL}$, imparted on the trailer 14 on the basis of at least the trailer mass value $m^{trailer}$,
- determining the trailer lateral force value $F_{T_{TR}}^{trailer2tractor}$ using lateral centrifugal force value $F_{T_{TL}}^{trailer,centrifugal}$.

Purely by way of example, the lateral centrifugal force value $F_{T_{TL}}^{trailer,centrifugal}$ may be determined on the basis of a longitudinal speed value $v_{L_{TL}}$ indicative of a speed of the trailer 14 in the trailer longitudinal direction $L_{TL}$ and a trailer curvature radius $R^{trailer}$, the radius of the curvature of a path that the centre of gravity of the trailer 14 currently is following (see Fig. 6). As a non-limiting example, the lateral centrifugal force value $F_{T_{TL}}^{trailer,centrifugal}$ may be determined in accordance with the following:

$$F_{T_{TL}}^{trailer,centrifugal} = m^{trailer} \frac{v_{L_{TL}}^2}{R^{trailer}} \tag{Eq. 26}$$

In a similar vein as for the lateral centrifugal force value $F_{T_{TL}}^{trailer,centrifugal}$ mentioned above, the force $F_{T_{TR}}^{tractor,imp}$ imparted on the tractor 12, in the tractor lateral direction $T_{TR}$, may comprise an addend relating to a lateral centrifugal force value $F_{T_{TR}}^{tractor,centrifugal}$ indicative of a centrifugal force, in the tractor lateral direction $T_{TR}$, imparted on the tractor 12 on the basis of at least the tractor mass value $m^{tractor}$, $v_{L_{TR}}$ of a speed of the tractor 12 in the tractor longitudinal direction $L_{TR}$ and a tractor curvature radius $R^{tractor}$, of the tractor 12 currently is following. Thus, in analogy with Eq. 26 hereinabove, the lateral centrifugal force value $F_{T_{TR}}^{tractor,centrifugal}$ for the tractor 12 may be determined in accordance with the following:

$$F_{T_{TR}}^{tractor,centrifugal} = m^{tractor}\frac{v_{L_{TR}}^2}{R^{tractor}} \qquad \text{Eq. 27}$$

In embodiments of the present invention, the longitudinal speed value $v_{L_{TR}}$ indicative of a speed of the tractor 12 in the tractor longitudinal direction $L_{TR}$ may be determined using a speed sensor (not shown) of the tractor 12. Moreover, though purely by way of example, in embodiments of the present invention the longitudinal speed value $v_{L_{TL}}$ indicative of a speed of the trailer 14 in the trailer longitudinal direction $L_{TL}$ may be set so as to equal the longitudinal speed value $v_{L_{TR}}$ indicative of a speed of the tractor 12 in the tractor longitudinal direction $L_{TR}$.

Going back to the lateral centrifugal force value of the trailer 14, though purely by way of example, the lateral centrifugal force value $F_{T_{TL}}^{trailer,centrifugal}$ for the trailer 14 may form part of, or even constitute, the connection force $F_{T_{TL}}^{trailer2tractor}$ in the trailer lateral direction $T_{TL}$ in accordance with the following (see e.g. Eq. 25 hereinabove):

$$F_{T_{TL}}^{trailer2tractor} = C \cdot F_{T_{TL}}^{trailer,centrifugal}. \qquad \text{Eq. 28}$$

It should be noted that that only a portion of the lateral centrifugal force value $F_{T_{TL}}^{trailer,centrifugal}$ ma be added to the trailer lateral force value $F_{T_{TR}}^{trailer2tractor}$. As such, the factor C in Eq. 28 hereinabove may be within the range of 0 to 1. Here, it should be noted that the ground engaging members of the trailer 14 may accommodate a portion of the lateral centrifugal force imparted on the trailer 14. As such, though purely by way of example, the portion of the lateral centrifugal force that will be imparted on the connection point 28 may be determined by means of a moment equilibrium equation taking the distance, in the trailer longitudinal direction $L_{TL}$, between the ground engaging members of the trailer 14 and the centre of gravity of the trailer, as well as the distance, in the trailer longitudinal direction $L_{TL}$, between the connection point 28 and the centre of gravity of the trailer 14 into account. To this end, reference is made to Eq. 46 hereinbelow presenting an example of how the above-mentioned distances may be taken into account.

However, it should also be noted that, though purely by way of example, the trailer lateral force value determination procedure may further comprise obtaining a lateral inclination angle value $\theta$ indicative of the inclination angle, in the trailer lateral direction $T_{TL}$, of the ground supporting the trailer 14. To this end, reference is made to Fig. 5 illustrating an implementation of a trailer 14 located on a transversally inclined slope.

As such, though purely by way of example, the trailer lateral force value determination procedure may comprise determining a lateral gravity force value $F_{T_{TL}}^{trailer,gravity}$ indicative of a lateral gravity force, in the trailer lateral direction $T_{TL}$, imparted on the trailer 14 on the basis of at least the trailer mass value $m^{trailer}$ and the lateral inclination angle value $\theta$. Moreover, the procedure may further comprise determining the trailer lateral force value using the lateral gravity force value $F_{T_{TL}}^{trailer,gravity}$. As such, though purely by way of example, Eq. 28 hereinabove may be extended in accordance with the following:

$$F_{T_{TL}}^{trailer2tractor} = C \cdot \left( F_{T_{TL}}^{trailer,centrifugal} + F_{T_{TL}}^{trailer,gravity} \right). \qquad \text{Eq. 29}$$

Again, the factor C in Eq. 29 may be within the range of 0 to 1 and may relate to the distances, in the trailer longitudinal direction $L_{TL}$, between the ground engaging members of the trailer 14, the centre of gravity of the trailer 14, and the connection point 28. As has been indicated hereinabove with reference to Eq. 24 for example, the trailer lateral force value determination procedure may further comprise multiplying each force value indicative of a force, in the trailer longitudinal direction $L_{TL}$, with the sine of the articulation angle value $\Psi$. In a similar vein, again with reference to Eq. 24 for example, the trailer lateral force value determination procedure may further comprise multiplying each force value indicative of a force, in the trailer lateral direction $T_{TL}$, with the cosine of the articulation angle value $\Psi$.

As has been intimated above, the longitudinal trailer inclination angle value $\phi$ may for instance be determined using an inclination sensor 32 of the trailer 14. However, alternatively, the longitudinal trailer inclination angle value $\phi$ may be determined using an inclination sensor 34 hosted by the tractor 12 as will be elaborated on hereinbelow. As such, the tractor 12 may comprise an inclination sensor 34, adapted to determine a longitudinal tractor inclination angle value $\phi'$ indicative of the inclination angle, in the tractor longitudinal direction $L_{TR}$, of the ground supporting the tractor 12. Moreover, with reference to Fig. 4, obtaining the longitudinal trailer inclination angle value $\phi$ indicative of the inclination angle, in the trailer longitudinal direction $L_{TL}$, of the ground supporting the trailer 14 may comprise:

- Obtaining a speed value $v_{L_{TR}}$ indicative of a current speed of the tractor 12 in the tractor longitudinal direction $L_{TR}$.

- Obtaining a distance value 36 indicative of a distance, in the tractor longitudinal direction $L_{TR}$, between the inclination sensor 34 and a reference point of the trailer 14. Purely by way of example, and as indicated in Fig. 4, the reference point may be the centre of gravity of the trailer 14.

- Using the speed value $v_{L_{TR}}$ and the distance value 36 for determining an elapsed time $\Delta t$ from a first time instant $t_1$ at which the inclination sensor 34 is located at a certain global position and a second time instant $t_2$ at which the reference point of the trailer is located at the same global position.

- Determining the longitudinal trailer inclination angle value $\phi$ using one or more longitudinal tractor inclination angle values $\phi'$ determined by the inclination sensor 34 as well as the elapsed time $\Delta t$.

As has been intimated hereinabove, the above examples are generally based on Eq. 3 such that the methods are carried on a tractor level. However, as has been intimated above, e.g. with reference to Eq. 4, embodiments may also be performed on a ground engaging member axle level. As such, when a tractor 12 comprises a set of wheel axles, wherein said set of wheel axles comprises at least one wheel axle and wherein each wheel axle is connected to individual wheels of said set of tractor wheels, the method according to the first aspect of the present invention may comprise performing the following for each wheel axle in the set of wheel axles:

- on the basis of the trailer lateral force value $F_{T_{TR}}^{trailer2tractor}$, determining a trailer axle lateral force value $F_{T_{TR}}^{trailer2tractor,axle}$ indicative of a trailer lateral force being or predicted to be imparted on the wheel axle;

- determining a tractor axle lateral force limit value using a tire model for determining a tire lateral force limit, taking at least one characteristic of the tire into account, for at least one, preferably each of, the wheel or wheels connected to the wheel axle;

- determining a reference axle lateral force value using the trailer axle lateral force value and the tractor axle lateral force limit value;

- determining a horizontal axle friction force value indicative of a possible total horizontal frictional force obtainable between the ground supporting the tractor 12 and at least one, preferably each of, the wheel or wheels connected to the wheel axle, and

- determining a tractor axle longitudinal force threshold value using the reference axle lateral force value and the horizontal axle friction force value, and

summarizing the axle tractor longitudinal force threshold value $F_{L_{TR}}^{ret,threshold,axle}$ for each wheel axle in the set of wheel axles in order to obtain the tractor longitudinal force threshold value $F_{L_{TR}}^{ret,threshold}$.

Furthermore, though purely by way of example, the step of determining the trailer axle lateral force value $F_{T_{TR}}^{trailer2tractor,axle}$ indicative of a trailer lateral force being or predicted to be imparted on the wheel axle on the basis of the trailer lateral force value $F_{T_{TR}}^{trailer2tractor}$ may comprise using a moment equilibrium equation using the following inputs:

- the trailer lateral force value $F_{T_{TR}}^{trailer2tractor}$;
- a distance $I_f$, $I_r$, in the tractor longitudinal direction $L_{TR}$, from each wheel axle to the centre of gravity of the tractor 12, and
- a distance $I_c$, in the tractor longitudinal direction $L_{TR}$, from the connection point 28 to the centre of gravity of the tractor 12.

In a similar vein, though purely by way of example, embodiments may also be performed on a wheel level. As such, embodiments of the present invention may comprise performing the following for at least a plurality, preferably for each one, of the wheels of the set of tractor wheels 18:

- on the basis of the trailer lateral force value $F_{T_{TR}}^{trailer2tractor}$, determining a trailer wheel lateral force value $F_{T_{TR}}^{trailer2tractor,wheel}$ indicative of a trailer lateral force being or predicted to be imparted on the wheel;

- determining a tractor wheel lateral force limit value using a tire model for determining a tire lateral force limit, taking at least one characteristic of the tire into account, for the wheel;

- determining a reference wheel lateral force value using the trailer wheel lateral force value and the tractor wheel lateral force limit value;

- determining a horizontal wheel friction force value indicative of a possible total horizontal frictional force obtainable between the ground supporting the tractor and at least one, preferably each of, the wheel or wheels connected to the wheel, and

- determining a tractor wheel longitudinal force threshold value using the reference wheel lateral force value and the horizontal wheel friction force value, and

summarizing the wheel tractor longitudinal force threshold value $F_{L_{TR}}^{ret,threshold,wheel}$ for each wheel in the set of wheel wheels in order to obtain the tractor longitudinal force threshold value $F_{L_{TR}}^{ret,threshold}$.

Furthermore, though purely by way of example, the step of determining the trailer wheel lateral force value $F_{T_{TR}}^{trailer2tractor,wheel}$ indicative of a trailer lateral force being or predicted to be imparted on the wheel on the basis of the trailer lateral force value $F_{T_{TR}}^{trailer2tractor}$ may comprise using a moment equilibrium equation using the following inputs:

- the trailer lateral force value $F_{T_{TR}}^{trailer2tractor}$;
- a distance $I_f$, $I_r$, in the tractor longitudinal direction $L_{TR}$, from each one of a plurality of wheels, preferably from each wheel, in the set of tractor wheels 18 to the centre of gravity of the tractor 12, and
- a distance $I_c$, in the tractor longitudinal direction $L_{TR}$, from the connection point 28 to the centre of gravity of the tractor 12.

It is also envisaged that embodiments of the present invention may use combinations of the above indicated wheel axle level approach and the wheel level approach. Purely by way of example, it is conceived that embodiments of the present invention may use the wheel axle level approach for certain axles of a tractor and the wheel level approach for the remaining wheels of the set of tractor wheels 18.

Irrespective of how the tractor longitudinal force threshold value $F_{L_{TR}}^{ret,thresold}$ has been determined, it is preferably used in a method for braking a vehicle combination 10 comprising a tractor 12 and a trailer 14. The tractor comprises a tractor brake assembly for regenerative braking of the tractor and the trailer comprises a trailer brake assembly for braking the trailer.

The method comprises:

- determining a tractor longitudinal force threshold value $F_{L_{TR}}^{ret,threshold}$ using the method according to the first aspect of the present invention, for instance in accordance with any one of the embodiments presented hereinabove, and

- operating the tractor brake assembly so as to provide a braking force being smaller than or equal to the tractor longitudinal force threshold value $F_{L_{TR}}^{ret,threshold}$.

As a non-limiting example, the method for braking a vehicle combination 10 may further comprise:

- obtaining a retardation request value $r_{req}$ indicative of a requested retardation of the vehicle combination 10;

- determining a requested braking force $F^{ret,request}$ to be imparted on the vehicle combination 10 on the basis of the retardation request value $r_{req}$,

- in response to the requested braking force $F^{ret,request}$ being smaller than or equal to the tractor longitudinal force threshold value $F_{L_{TR}}^{ret,threshold}$, operating the tractor brake assembly but not the trailer brake assembly for braking the vehicle combination 10.

The requested braking force $F^{ret,request}$ may be determined in a plurality of different ways. However, as a non-limiting example, determining a requested braking force $F^{ret,request}$ to be imparted on the vehicle combination 10 on the basis of the retardation request value $r_{req}$ may comprise obtaining a tractor mass value $m^{tractor}$ indicative of the current mass of the tractor and a trailer mass value $m^{trailer}$ indicative of the current mass of the trailer.

Purely by way of example, the requested braking force $F_{L_{TR}}^{ret,request}$ may be expressed as a force in the tractor longitudinal direction $L_{TR}$ and may be determined in accordance with the following:
$$F_{L_{TR}}^{ret,request} = \left( m^{tractor} + m^{trailer} \right) \cdot r_{L_{TL}} + F_{L_{TR}}^{resistance}.$$

The force term $F_{L_{TR}}^{resistance}$ may relate to resistance from e.g. drag forces imparted on the vehicle combination 10.

Moreover, determining the requested braking force $F^{ret,request}$ to be imparted on the vehicle combination 10 on the basis of the retardation request value $r_{req}$ may further comprise determining a longitudinal trailer inclination angle value indicative of the inclination angle, in the trailer longitudinal direction, of the ground supporting the trailer.

Optionally, determining a requested braking force to be imparted on the vehicle combination on the basis of the retardation request value further may comprise determining a longitudinal tractor inclination angle value indicative of the inclination angle, in the tractor longitudinal direction, of the ground supporting the tractor.

Fig. 6 is a schematic plan view of a vehicle combination 10 comprising a tractor 12 and a trailer 14. In the specific embodiment of the vehicle combination illustrated in Fig. 6, the tractor 12 comprises two sets of wheels, viz a front set of wheels 38 and a rear set of wheels 40. Purely by way of example, the front set of wheels 38 may be steerable, and may thus have a variable steering angle $\delta$, but the rear set of wheels 40 need not necessarily be steerable.

The implementation of the trailer 14 illustrated in Fig. 6 comprises a set of wheels 42 and the trailer 14 is pivotally connected to the tractor 12 via a connection point 28. Moreover, Fig. 6 indicates the following distances:

$l_f$   being the distance, in the tractor longitudinal direction $L_{TR}$, from the front set of wheels 38 to the centre of gravity of the tractor 12;

$l_r$   being the distance, in the tractor longitudinal direction $L_{TR}$, from the rear set of wheels 40 to the centre of gravity of the tractor 12;

$l_c$   being the distance, in the tractor longitudinal direction $L_{TR}$, from the connection point 28 to the centre of gravity of the tractor 12;

$l_{f,t}$   being the distance, in the trailer longitudinal direction $L_{TL}$, from the connection point 28 to the centre of gravity of the trailer 14;

$l_{r,t}$   being the distance, in the trailer longitudinal direction $L_{TL}$, from the connection point 28 to the set of wheels 42 of the trailer 14;

$R_f$   being the turning radius of the front set of wheels 38;

$R_r$   being the turning radius of the rear set of wheels 40;

$R_{f,t}$   being the turning radius of the connection point 28, and

$R_{r,t}$   being the turning radius of the set of wheels 42 of the trailer 14.

Purely by way of example, the above distances may be known (for instance furnished by the supplier of the tractor 12 and the trailer 14) and the steering angle $\delta$ may be determined using a steering angle sensor (not shown). Using the above distances $l_f$, $l_r$, $l_c$, $l_{f,t}$ and $l_{r,t}$ as well as a value indicative of the steering angle $\delta$, the above-mentioned turning radii as well as the previously mentioned articulation angle $\Psi$ can be determined in accordance with the following set of equations:

$$R_f = \frac{(l_f + l_r)}{\sin |\delta|} \qquad\qquad \text{Eq. 30}$$

$$R_r = \frac{(l_f + l_r)}{\tan |\delta|} \qquad\qquad \text{Eq. 31}$$

$$R_{f,t} = \sqrt{R_r^2 + (l_r - l_c)^2} \qquad\qquad \text{Eq. 32}$$

$$R_{r,t} = \sqrt{R_{f,t}^2 - (l_{f,t} + l_{r,t})^2} \qquad\qquad \text{Eq. 33}$$

$$R_{CoG} = \sqrt{R_r^2 + l_r^2} \qquad\qquad \text{Eq. 34}$$

$$R_{CoG,t} = \sqrt{R_{r,t}^2 + l_{r,t}^2} \qquad\qquad \text{Eq. 35}$$

$$u = \tan^{-1}\left(\frac{R_{r,t}}{l_{f,t} + l_{r,t}}\right) \qquad\qquad \text{Eq. 36}$$

$$w = \tan^{-1}\left(\frac{R_r}{l_r - l_c}\right) \qquad\qquad \text{Eq. 37}$$

$$\psi = -sign(\delta)(w - u) \qquad\qquad \text{Eq. 38}$$

When the tractor 12 has a certain speed $v_{L_{TR}}$, in the tractor longitudinal direction $L_{TR}$, the trailer 14 has a certain speed $v_{L_{TL}}$, in the trailer longitudinal direction $L_{TL}$, the previously mentioned longitudinal trailer retardation value $r_{L_{TL}}$ indicative of a longitudinal trailer retardation being or predicted to be imparted on the trailer 14 has been obtained and the trailer 14 is travelling on a slope with an inclination angle $\phi$, the tractor lateral force value $F_{T_{TR}}^{tractor}$ - presented for each axle of the Fig. 6 tractor - can be determined in accordance with the following of the Fig. 6 embodiment:

$$F_{L_{TR}}^{requested} = (m^{tractor} + m^{trailer}) \cdot r_{L_{TL}} + F_{L_{TR}}^{resistance} \qquad\qquad \text{Eq. 39}$$

$$F_{T_{TR}}^{tractor,centrifugal} = m^{tractor}\frac{v_{L_{TR}}^2}{R_{CoG}} \qquad\qquad \text{Eq. 40}$$

$$F_{T_{TL}}^{trailer,centrifugal} = m^{trailer}\frac{v_{L_{TL}}^2}{R_{CoG,t}} \qquad\qquad \text{Eq. 41}$$

$$F_{L_{TL}}^{trailer,inertial} = m^{trailer} \cdot r_{L_{TL}} \qquad\qquad \text{Eq. 42}$$

$$F_{L_{TL}}^{trailer,gravity} = m^{trailer} \cdot g \cdot \sin(\theta) \qquad\qquad \text{Eq. 43}$$

$$F_{T_{TR}}^{tractor,centrifugal,front} = F_{T_{TR}}^{tractor,centrifugal} \frac{l_r}{l_r + l_f} \qquad \text{Eq. 44}$$

$$F_{T_{TR}}^{tractor,centrifugal,rear} = F_{T_{TR}}^{tractor,centrifugal} \frac{l_f}{l_r + l_f} \qquad \text{Eq. 45}$$

$$F_{T_{TL}}^{trailer,centrifugal,cp} = F_{T_{TL}}^{trailer,centrifugal} \frac{l_{r,t}}{l_{f,t} + l_{r,t}} \qquad \text{Eq. 46}$$

$$F_{T_{TR}}^{trailer2tractor,total} = F_{T_{TL}}^{trailer,centrifugal,cp} \cos\psi + \left(F_{L_{TL}}^{trailer,inertial} + F_{L_{TL}}^{trailer,gravity}\right)\sin\psi \qquad \text{Eq. 47}$$

$$F_{T_{TR}}^{trailer2tractor,total,front} = F_{T_{TR}}^{trailer2tractor,total} \frac{l_r - l_c}{l_f + l_r} \qquad \text{Eq. 48}$$

$$F_{T_{TR}}^{trailer2tractor,total,rear} = F_{T_{TR}}^{trailer2tractor,total} \frac{l_f + l_c}{l_f + l_r} \qquad \text{Eq. 49}$$

$$F_{T_{TR}}^{tractor,total,front} = F_{T_{TR}}^{tractor,centrifugal,front} + F_{T_{TR}}^{trailer2tractor,total,front} \qquad \text{Eq. 50}$$

$$F_{T_{TR}}^{tractor,total,rear} = F_{T_{TR}}^{tractor,centrifugal,rear} + F_{T_{TR}}^{trailer2tractor,total,rear} \qquad \text{Eq. 51}$$

In the above equations, the superscript "front" indicates forces associated with the front set of wheels 38, the superscript "rear" indicates forces associated with the rear set of wheels 40 of the tractor 12 and the superscript "cp" indicates forces associated with the connection point 28.

The above equations and Fig. 6 are related to a vehicle combination 10 comprising a tractor 12 having two set of wheels 38, 40 and a trailer 14 having one set of wheels 42. However, the above equations Eq. 30 to Eq. 51 can of course be expanded to any number of set of wheels of each one of the tractor 12 and the trailer 14.

Although the present invention has been presented in relation to methods, it should be noted that the above disclosure is equally applicable to each one of the following:

- a computer program comprising program code means for performing the method of the first or second aspects of the invention when the program is run on a computer;
- a computer readable medium carrying a computer program comprising program code means for performing the method of the first or second aspects of the invention when the program product is run on a computer;
- a control unit 30 configured to perform the method according to the first or second aspects of the invention;
- a vehicle combination comprising a tractor 12, a trailer 14 and a control unit 30 according to the above.

It is to be understood that the present invention is not limited to the embodiments described above and illustrated in the drawings; rather, the skilled person will recognize that many changes and modifications may be made within the scope of the appended claims.

## Claims

1. A method for determining a tractor longitudinal force threshold value $\left(F_{L_{TR}}^{ret,threshold}\right)$ for a tractor longitudinal retardation force $\left(F_{L_{TR}}^{ret}\right)$ that can be imparted on a tractor (12) of a vehicle combination (10) comprising said tractor (12) and a trailer (14) for retarding said vehicle combination,

   said trailer (14) having a trailer longitudinal extension in a trailer longitudinal direction ($L_{TL}$), a trailer lateral extension in a trailer lateral direction ($T_{TL}$) and a trailer vertical extension in a trailer vertical direction ($V_{TL}$), wherein said trailer longitudinal direction ($L_{TL}$) corresponds to an intended direction of travel of said trailer (14) when said vehicle combination (10) is travelling straight ahead, said trailer vertical direction ($V_{TL}$) corresponds to a direction of a normal to a planar surface supporting the trailer (14) and said trailer lateral direction ($T_{TL}$) being perpendicular to each one of said trailer longitudinal direction ($L_{TL}$) and said trailer vertical direction ($V_{TL}$), said tractor (12) having a tractor longitudinal extension in a tractor longitudinal direction ($L_{TR}$), a tractor lateral extension in a tractor lateral direction ($T_{TR}$) and a tractor vertical extension in a tractor vertical direction ($V_{TR}$), wherein said tractor longitudinal direction ($L_{TR}$) corresponds to an intended direction of travel of said tractor (12) when said vehicle combination (10) is travelling straight ahead, said tractor vertical direction ($V_{TR}$) corresponds to a direction of a normal to a planar surface supporting the tractor (12) and said tractor lateral direction ($T_{TR}$) being perpendicular to each one of said tractor longitudinal direction ($L_{TR}$) and said tractor vertical direction ($V_{TR}$), wherein said tractor longitudinal retardation force $\left(F_{L_{TR}}^{ret}\right)$ extends in a direction parallel to said tractor longitudinal direction ($L_{TR}$), said tractor (12) comprising a set of tractor wheels (18) adapted to engage the ground supporting said tractor (12), each wheel of said set of tractor wheels (18) comprising a tire,
said method being **characterized by**:

- determining a tractor lateral force value $\left(F_{T_{TR}}^{tractor}\right)$, indicative of a tractor lateral force being or predicted to be imparted on said tractor (12), using a tractor lateral force value determination procedure comprising:

- obtaining a trailer mass value $\left(m^{trailer}\right)$ indicative of the current mass of said trailer (14);
- obtaining a trailer operating value indicative of the current or predicted operating condition of said trailer (14);
- determining an articulation angle value ($\psi$) indicative of a current articulation angle between said tractor longitudinal direction ($L_{TR}$) and said trailer longitudinal direction ($L_{TL}$), and
- determining said tractor lateral force value $\left(F_{T_{TR}}^{tractor}\right)$ using said trailer mass value ($m^{trailer}$), said trailer operating value and said articulation angle value ($\psi$);

- determining a tractor tire lateral force limit value $\left(F_{T_{TR}}^{tire}\right)$ using a tire model for determining a tire lateral force limit, taking at least one characteristic of the tire into account, for each wheel of at least a subset of said set of tractor wheels (18);
- determining a reference lateral force value $\left(F_{T_{TR}}^{tractor,ref}\right)$ using said tractor lateral force value $\left(F_{T_{TR}}^{tractor}\right)$ and said tractor tire lateral force limit value $\left(F_{T_{TR}}^{tire}\right)$;
- determining a horizontal friction force value $\left(F_{total}^{tractor}\right)$ indicative of a possible total horizontal frictional force obtainable between said ground supporting said tractor (12) and said set of tractor wheels (18), and
- determining said tractor longitudinal force threshold value $\left(F_{L_{TR}}^{ret,threshold}\right)$ using said reference lateral force value $\left(F_{T_{TR}}^{tractor,ref}\right)$ and said horizontal friction force value $\left(F_{total}^{tractor}\right)$.

2. The method according to claim 1, wherein each wheel of said set of tractor wheels (18) has a wheel longitudinal direction ($L_W$) being parallel to said tractor longitudinal direction ($L_{TR}$) when said vehicle combination (10) is travelling straight ahead, as well as a wheel transversal direction ($T_W$) being parallel to said tractor transversal direction ($T_{TR}$) when said vehicle combination (10) is travelling straight ahead, wherein said feature of determining said tractor tire lateral force limit value $\left(F_{T_{TR}}^{tire}\right)$ comprises the following for each wheel of at least a subset of said set of tractor wheels:

- determining a wheel longitudinal velocity value ($v_{Lw}$) indicative of a velocity in said wheel longitudinal direction ($L_W$) of said wheel,
- determining a wheel transversal velocity value ($v_{Tw}$) indicative of a velocity in said wheel transversal direction ($T_W$) of said wheel,
- determining a sliding threshold value ($\sigma_{sl}$), indicative of a sliding threshold above which said wheel is expected to slide relative to the ground supporting said tractor (12), and
- using said wheel longitudinal velocity value ($v_{Lw}$), said wheel transversal velocity value ($v_{Tw}$) and said sliding

threshold value ($\sigma_{sl}$) for determining a wheel specific tractor tire lateral force limit value portion forming part of said tractor tire lateral force limit value $\left(F_{T_{TR}}^{tire}\right)$,

wherein preferably said wheel has a wheel vertical direction ($V_W$) being perpendicular to each one of said wheel longitudinal direction ($L_W$) and said wheel transversal direction ($T_W$), wherein said feature of determining said sliding threshold value comprises using at least the following:

- a contact value ($I_a$) proportional to a distance, in said wheel longitudinal direction, along which contact between said wheel and the ground supporting said tractor (12) is determined to be established;
- a stiffness value ($c_p$) indicative of a stiffness coefficient of the tire of said wheel;
- a vertical force value ($F_{VW}$) indicative of a force, in said wheel vertical direction ($V_W$), imparted on said wheel, and
- a friction value ($\mu$) indicative of the friction between the wheel and the ground supporting said tractor (12),

wherein preferably said feature of determining said tractor tire lateral force limit value further comprises the following for each wheel of at least a subset of said set of tractor wheels:

- determining a longitudinal slip value (x), indicative of a slip in said wheel longitudinal direction ($L_W$), using said wheel longitudinal velocity value ($v_{Lw}$) and a product obtained by multiplying the effective rolling radius ($R_e$) of said wheel by an angular velocity value ($\omega$) indicative of a current angular velocity of said wheel,

wherein preferably said feature of determining said tractor tire lateral force limit value further comprises the following for each wheel of at least a subset of said set of tractor wheels:

- determining a slip angle value ($\alpha$) using said wheel longitudinal velocity value ($v_{LW}$) and said wheel transversal velocity value ($v_{TW}$), preferably by dividing said wheel transversal velocity value ($v_{TW}$) by said wheel longitudinal velocity value ($v_{LW}$), more preferred by calculating the arctangent for an argument corresponding to the ratio between said wheel transversal velocity value ($v_{TW}$) and said wheel longitudinal velocity value ($v_{LW}$) multiplied by minus one.

3. The method according to any one of the preceding claims, wherein said feature of determining said reference lateral force value $\left(F_{T_{TR}}^{tractor,ref}\right)$ using said tractor lateral force value $\left(F_{T_{TR}}^{tractor}\right)$ and said tractor tire lateral force limit value $\left(F_{T_{TR}}^{tire}\right)$ comprises setting said reference lateral force to equal the one of said tractor lateral force value and said tractor tire lateral force limit value having the largest absolute value.

4. The method according to any one of the preceding claims, wherein said tractor lateral force value determination procedure further comprises:

- obtaining a longitudinal trailer inclination angle value ($\phi$) indicative of the inclination angle, in said trailer longitudinal direction, of the ground supporting said trailer (14);
- determining a longitudinal gravity force value $\left(F_{L_{TL}}^{trailer,gravity}\right)$ indicative of a longitudinal gravity force, in said trailer longitudinal direction, imparted on said trailer on the basis of at least said trailer mass value and said longitudinal trailer inclination angle value, and
- determining said tractor lateral force value $\left(F_{T_{TR}}^{tractor}\right)$ using said longitudinal gravity force value $\left(F_{L_{TL}}^{trailer,gravity}\right)$, and/or

wherein said tractor lateral force value determination procedure further comprises:

- obtaining a longitudinal trailer retardation value ($r_{L_{TL}}$) indicative of a longitudinal trailer retardation being or predicted to be imparted on said trailer (14);
- determining a longitudinal inertial force value $\left(F_{L_{TL}}^{trailer,inertial}\right)$ indicative of a longitudinal inertial force, in said trailer lateral direction, imparted on said trailer on the basis of at least said trailer mass value ($m^{trailer}$) and said longitudinal trailer retardation value ($r_{L_{TL}}$), and

- determining said tractor lateral force value $(F_{T_{TR}}^{tractor})$ using said longitudinal inertial force value $(F_{L_{TL}}^{trailer,inertial})$ .

5. The method according to any one of the preceding claims, wherein said tractor lateral force value determination procedure further comprises:

- determining a lateral centrifugal force value $(F_{T_{TL}}^{trailer,centrifugal})$ indicative of a centrifugal force, in said trailer lateral direction ($T_{TL}$), imparted on said trailer on the basis of at least said trailer mass value ($m^{traile}$) , and
- determining said tractor lateral force value $(F_{T_{TR}}^{tractor})$ using said lateral centrifugal force value $(F_{T_{TL}}^{trailer,centrifugal})$ , and/or
- obtaining a lateral inclination angle value ($\theta$) indicative of the inclination angle, in said trailer lateral direction, of the ground supporting said trailer (14);
- determining a lateral gravity force value $(F_{T_{TL}}^{trailer,gravity})$ indicative of a lateral gravity force, in said trailer lateral direction, imparted on said trailer on the basis of at least said trailer mass value ($m^{trailer}$) and said lateral inclination angle value ($\theta$), and
- determining said tractor lateral force value $(F_{T_{TR}}^{tractor})$ using said lateral gravity force value $(F_{T_{TL}}^{trailer,gravity})$ .

6. The method according to any one of the preceding claims, wherein said tractor lateral force value determination procedure further comprises:

- multiplying each force value indicative of a force, in said trailer longitudinal direction, with the sine of said articulation angle value ($\Psi$), and/or
- multiplying each force value indicative of a force, in said trailer lateral direction, with the cosine of said articulation angle value ($\Psi$).

7. The method according to any one of the preceding claims, wherein said tractor (12) comprises a set of wheel axles, wherein said set of wheel axles comprises at least one wheel axle and wherein each wheel axle is connected to individual wheels of said set of tractor wheels, wherein said method comprises performing the following for each wheel axle in said set of wheel axles:

- on the basis of said trailer lateral force value $(F_{T_{TR}}^{trailer2tractor})$, determining a trailer axle lateral force value $(F_{T_{TR}}^{trailer2tractor,axle})$ indicative of a trailer lateral force being or predicted to be imparted on said wheel axle;
- determining a tractor axle lateral force limit value using a tire model for determining a tire lateral force limit, taking at least one characteristic of the tire into account, for at least one, preferably each of, the wheel or wheels connected to said wheel axle;
- determining a reference axle lateral force value using said trailer axle lateral force value and said tractor axle lateral force limit value;
- determining a horizontal axle friction force value indicative of a possible total horizontal frictional force obtainable between said ground supporting said tractor (12) and at least one, preferably each of, the wheel or wheels connected to said wheel axle;
- determining a tractor axle longitudinal force threshold value using said reference axle lateral force value and said horizontal axle friction force value, and

summarizing the axle tractor longitudinal force threshold value $(F_{L_{TR}}^{ret,threshold,axle})$ for each wheel axle in said set of wheel axles in order to obtain said tractor longitudinal force threshold value $(F_{L_{TR}}^{ret,threshold})$ ,

wherein preferably the step of determining said trailer axle lateral force value $(F_{T_{TR}}^{trailer2tractor,axle})$ indicative of a trailer lateral force being or predicted to be imparted on said wheel axle on the basis of said trailer lateral force value $(F_{T_{TR}}^{trailer2tractor})$ comprises using a moment equilibrium equation using the following inputs:

- said trailer lateral force value $(F_{T_{TR}}^{trailer2tractor})$.
- a distance ($l_f$, $l_r$), in the tractor longitudinal direction ($L_{TR}$), from each wheel axle to the centre of gravity of said tractor (12), and
- a distance ($l_c$), in the tractor longitudinal direction ($L_{TR}$), from the connection point (28) to the centre of gravity of the tractor (12).

8. The method according to any one of the preceding claims, wherein said method comprises performing the following for at least a plurality, preferably for each one, of the wheels of said set of set of tractor wheels:

- on the basis of said trailer lateral force value $(F_{T_{TR}}^{trailer2tractor})$, determining a trailer wheel lateral force value $(F_{T_{TR}}^{trailer2tractor,wheel})$ indicative of a trailer lateral force being or predicted to be imparted on said wheel;
- determining a tractor wheel lateral force limit value using a tire model for determining a tire lateral force limit, taking at least one characteristic of the tire into account, for said wheel;
- determining a reference wheel lateral force value using said trailer wheel lateral force value and said tractor wheel lateral force limit value;
- determining a horizontal wheel friction force value indicative of a possible total horizontal frictional force obtainable between said ground supporting said tractor and at least one, preferably each of, the wheel or wheels connected to said wheel;
- determining a tractor wheel longitudinal force threshold value using said reference wheel lateral force value and said horizontal wheel friction force value, and

summarizing the wheel tractor longitudinal force threshold value $(F_{L_{TR}}^{ret,threshold,wheel})$ for each wheel in said set of wheel wheels in order to obtain said tractor longitudinal force threshold value $(F_{L_{TR}}^{ret,threshold})$, wherein preferably the step of determining said trailer wheel lateral force value $(F_{T_{TR}}^{trailer2tractor,wheel})$ indicative of a trailer lateral force being or predicted to be imparted on said wheel on the on the basis of said trailer lateral force value $(F_{T_{TR}}^{trailer2tractor})$ comprises using a moment equilibrium equation using the following inputs:

- said trailer lateral force value $(F_{T_{TR}}^{trailer2tractor})$;
- a distance ($l_f$, $l_r$), in the tractor longitudinal direction ($L_{TR}$), from each one of a plurality of wheels, preferably from each wheel, in said of said set of set of tractor wheels to the centre of gravity of said tractor (12), and
- a distance ($l_c$), in the tractor longitudinal direction ($L_{TR}$), from the connection point (28) to the centre of gravity of the tractor (12).

9. A method for braking a vehicle combination (10) comprising a tractor (12) and a trailer (14), said tractor (12) comprises a tractor brake assembly (16, 22, 24) for regenerative braking of said tractor (12) and said trailer (14) comprising a trailer brake assembly (26) for braking said trailer (14), said method comprising:

- determining a tractor longitudinal force threshold value $(F_{L_{TR}}^{ret,threshold})$ using the method according to any one of the preceding claims:
- operating said tractor brake assembly (16, 22, 24) so as to provide a braking force being smaller than or equal to said tractor longitudinal force threshold value $(F_{L_{TR}}^{ret,threshold})$,

wherein said method preferably further comprises:

- obtaining a retardation request value ($r_{req}$) indicative of a requested retardation of said vehicle combination (10);
- determining a requested braking force ($F^{ret,request}$) to be imparted on said vehicle combination on the basis of said retardation request value ($r_{req}$);
- in response to said braking force ($F^{ret,request}$) being smaller than or equal to said tractor longitudinal force threshold value $(F_{L_{TR}}^{ret,threshold})$, operating said tractor brake assembly (16, 22, 24) but not said trailer brake assembly (26) for braking said vehicle combination,

wherein determining a requested braking force to be imparted on said vehicle combination on the basis of said retardation request value preferably further comprises obtaining a tractor mass value ($m^{tractor}$) indicative of the current mass of said tractor (12) and a trailer mass value ($m^{trailer}$) indicative of the current mass of said trailer (14).

10. The method according to claim 9, wherein determining a requested braking force to be imparted on said vehicle combination on the basis of said retardation request value ($r_{req}$) further comprises determining a longitudinal trailer inclination angle value ($\phi$) indicative of the inclination angle, in said trailer longitudinal direction, of the ground supporting said trailer.

11. The method according to any one of claims 9 to 10, wherein determining a requested braking force to be imparted on said vehicle combination (10) on the basis of said retardation request value ($r_{req}$) further comprises determining a longitudinal tractor inclination angle value indicative of the inclination angle, in said tractor longitudinal direction, of the ground supporting said tractor.

12. A computer program comprising program code means for performing the method of any one of the preceding claims when said program is run on a computer.

13. A computer readable medium carrying a computer program comprising program code means for performing the method of any of claims 1 - 11 when said program product is run on a computer.

14. A control unit (30) configured to perform the method according to any of claims 1 - 11.

15. A vehicle combination (10) comprising a tractor (12), a trailer (14) and a control unit (30) according to claim 14.

**Patentansprüche**

1. Verfahren zum Bestimmen eines Zugmaschinen-Längskraftschwellenwerts $\left(F_{L_{TR}}^{ret,Schwelle}\right)$ für eine Zugmaschinen-Längsverlangsamungskraft $F_{L_{TR}}^{ret}$, die auf eine Zugmaschine (12) einer Fahrzeugkombination (10) ausgeübt werden kann, umfassend die Zugmaschine (12) und einen Anhänger (14), zum Verlangsamen der Fahrzeugkombination,

wobei der Anhänger (14) eine Anhänger-Längserstreckung in einer Anhänger-Längsrichtung ($L_{TL}$), eine Anhänger-Quererstreckung in einer Anhänger-Querrichtung ($T_{TL}$) und eine Anhänger-Vertikalerstreckung in einer Anhänger-Vertikalrichtung ($V_{TL}$) aufweist, wobei die Anhänger-Längsrichtung ($L_{TL}$) einer beabsichtigten Fahrtrichtung des Anhängers (14) entspricht, wenn die Fahrzeugkombination (10) geradeaus fährt, die Anhänger-Vertikalrichtung ($V_{TL}$) einer Richtung einer Normalen zu einer planaren Oberfläche entspricht, die den Anhänger (14) trägt, und die Anhänger-Querrichtung ($T_{TL}$) senkrecht zu jeder der Anhänger-Längsrichtung ($L_{TL}$) und der Anhänger-Vertikalrichtung ($V_{TL}$) ist,
die Zugmaschine (12) eine Zugmaschinen-Längserstreckung in einer Zugmaschinen-Längsrichtung ($L_{TR}$), eine Zugmaschinen-Quererstreckung in einer Zugmaschinen-Querrichtung ($T_{TR}$) und eine Zugmaschinen-Vertikalerstreckung in einer Zugmaschinen-Vertikalrichtung ($V_{TR}$) aufweist, wobei die Zugmaschinen-Längsrichtung ($L_{TR}$) einer beabsichtigten Fahrtrichtung der Zugmaschine (12) entspricht, wenn die Fahrzeugkombination (10) geradeaus fährt, Zugmaschinen-Vertikalrichtung ($V_{TR}$) einer Richtung einer Normalen zu einer planaren Oberfläche entspricht, die die Zugmaschine (12) trägt, und die Zugmaschinen-Querrichtung ($T_{TR}$) senkrecht zu jeder der Zugmaschinen-Längsrichtung ($L_{TR}$) und der Zugmaschinen-Vertikalrichtung ($V_{TR}$) ist, wobei sich die Zugmaschinen-Längsverlangsamungskraft $\left(F_{L_{TR}}^{ret}\right)$ in einer Richtung parallel zu der Zugmaschinen-Längsrichtung ($L_{TR}$) erstreckt, die Zugmaschine (12) umfassend einen Satz von Zugmaschinenrädern (18), die angepasst sind, um mit dem Boden, der die Zugmaschine (12) trägt, in Eingriff zu kommen, jedes Rad des Satzes von Zugmaschinenrädern (18) umfassend einen Reifen, wobei das Verfahren **gekennzeichnet ist durch**:

- Bestimmen eines Zugmaschinen-Querkraftwerts $\left(F_{T_{TR}}^{Zugmaschine}\right)$, der eine Zugmaschinen-Querkraft angibt, die auf die Zugmaschine (12) ausgeübt oder für diese vorhergesagt wird, unter Verwendung eines Zugmaschinen-Querkraftwertbestimmungsvorgangs, umfassend:

- Erhalten eines Anhänger-Massenwerts ($m^{Anhänger}$), der die aktuelle Masse des Anhängers (14) angibt;
- Erhalten eines Anhänger-Betriebswerts, der die aktuelle oder vorhergesagte Betriebsbedingung des Anhängers (14) angibt;
- Bestimmen eines Knickwinkelwerts ($\Psi$), der einen aktuellen Knickwinkel zwischen der Zugmaschinen-Längsrichtung ($L_{TR}$) und der Anhänger-Längsrichtung ($L_{TL}$) angibt, und

- Bestimmen des Zugmaschinen-Querkraftwerts $\left( F_{T_{TR}}^{Zugmaschine} \right)$ unter Verwendung des Anhänger-Massenwerts ($m^{Anhänger}$), des Anhänger-Betriebswerts und des Knickwinkelwerts ($\Psi$);

- Bestimmen eines Zugmaschinen-Reifenquerkraftgrenzwerts $\left( F_{T_{TR}}^{Reifen} \right)$ unter Verwendung eines Reifenmodells zum Bestimmen einer Reifenquerkraftgrenze, wobei mindestens eine Eigenschaft des Reifens für jedes Rad mindestens eines Teilsatzes des Satzes von Zugmaschinenrädern (18) berücksichtigt wird;

- Bestimmen eines Referenzquerkraftwerts $\left( F_{T_{TR}}^{Zugmaschine,Ref} \right)$ unter Verwendung des Zugmaschinen-Querkraftwerts $\left( F_{T_{TR}}^{Zugmaschine} \right)$ und des Zugmaschinen-Reifenquerkraftgrenzwerts $\left( F_{T_{TR}}^{Reifen} \right)$;

- Bestimmen eines Horizontalreibungskraftwerts $\left( F_{gesamt}^{Zugmaschine} \right)$, der eine mögliche Gesamthorizontalreibungskraft angibt, die zwischen dem Boden, der die Zugmaschine (12) trägt, und dem Satz von Zugmaschinenrädern (18) erhältlich ist, und

- Bestimmen des Zugmaschinen-Längskraftschwellenwerts ( $F_{L_{TR}}^{ret,Schwelle}$ ) unter Verwendung des Referenzquerkraftwerts ( $F_{T_{TR}}^{Zugmaschine,Ref}$ ) und des Horizontalreibungskraftwerts ( $F_{gesamt}^{Zugmaschine}$ ).

2. Verfahren nach Anspruch 1, wobei jedes Rad des Satzes von Zugmaschinenrädern (18) eine Radlängsrichtung ($L_W$), die parallel zu der Zugmaschinen-Längsrichtung ($L_{TR}$) ist, wenn die Fahrzeugkombination (10) geradeaus fährt, sowie eine Radtransversalrichtung (Tw), die parallel zu der Zugmaschinen-Transversalrichtung ($T_{TR}$) ist, wenn die Fahrzeugkombination (10) geradeaus fährt, aufweist, wobei das Merkmal des Bestimmens des Zugmaschinen-Reifenquerkraftgrenzwerts ( $F_{T_{TR}}^{Reifen}$ ) für jedes Rad von mindestens einem Teilsatz des Satzes von Zugmaschinenrädern das Folgende umfasst:

- Bestimmen eines Radlängsgeschwindigkeitswerts ($V_{LW}$), der eine Geschwindigkeit in der Radlängsrichtung ($L_W$) des Rads angibt,
- Bestimmen eines Radtransversalgeschwindigkeitswerts ($V_{TW}$), der eine Geschwindigkeit in der Radtransversalrichtung ($T_W$) des Rads angibt,
- Bestimmen eines Rutschschwellenwerts ($\sigma_{sl}$), der eine Rutschschwelle angibt, oberhalb derer erwartet wird, dass das Rad relativ zu dem Boden, der die Zugmaschine (12) trägt, rutscht, und
- Verwenden des Radlängsgeschwindigkeitswerts ($V_{LW}$), des Radtransversalgeschwindigkeitswerts ($V_{TW}$) und des Rutschschwellenwerts ($\sigma_{sl}$) zum Bestimmen eines radspezifischen Zugmaschinen-Reifenquerkraftgrenzwertabschnitts, der Teil des Zugmaschinen-Reifenquerkraftgrenzwerts ausbildet, ( $F_{T_{TR}}^{Reifen}$ )

wobei vorzugsweise das Rad eine Radvertikalrichtung ($V_W$) aufweist, die senkrecht zu jeder der Radlängsrichtung ($L_W$) und der Radtransversalrichtung ($T_W$) ist, wobei das Merkmal des Bestimmens des Rutschschwellenwerts das Verwenden von mindestens dem Folgendem umfasst:

- einem Kontaktwert ($I_a$), der proportional zu einer Distanz in der Radlängsrichtung ist, entlang welcher bestimmt wird, dass ein Kontakt zwischen dem Rad und dem Boden, der die Zugmaschine (12) trägt, hergestellt wird;
- einem Steifigkeitswert ($C_p$), der einen Steifigkeitskoeffizienten des Reifens des Rads angibt;
- einem Vertikalkraftwert ($F_{VW}$), der eine Kraft in der Radvertikalrichtung ($V_W$) angibt, die auf das Rad ausgeübt wird, und

- einem Reibungswert ($\mu$), der die Reibung zwischen dem Rad und dem Boden, der die Zugmaschine (12) trägt, angibt,

wobei vorzugsweise das Merkmal des Bestimmens des Zugmaschinen-Reifenquerkraftgrenzwerts ferner für jedes Rad von mindestens einem Teilsatz des Satzes von Zugmaschinenrädern Folgendes umfasst:

- Bestimmen eines Längsschlupfwerts (K), der einen Schlupf in der Radlängsrichtung ($L_W$) angibt, unter Verwendung des Radlängsgeschwindigkeitswerts ($V_{LW}$) und eines Produkts, das durch Multiplizieren des effektiven Abrollradius ($R_e$) des Rads mit einem Winkelgeschwindigkeitswert ($\omega$) erhalten wird, der eine aktuelle Winkelgeschwindigkeit des Rads angibt,

wobei vorzugsweise das Merkmal des Bestimmens des Zugmaschinen-Reifenquerkraftgrenzwerts ferner für jedes Rad von mindestens einem Teilsatz des Satzes von Zugmaschinenrädern Folgendes umfasst:

- Bestimmen eines Schlupfwinkelwerts ($\alpha$) unter Verwendung des Radlängsgeschwindigkeitswerts ($V_{LW}$) und des Radtransversalgeschwindigkeitswerts ($V_{TW}$), vorzugsweise durch Dividieren des Radtransversalgeschwindigkeitswerts ($v_{TW}$) durch den Radlängsgeschwindigkeitswert ($V_{LW}$), mehr bevorzugt durch Berechnen des Arkustangens für ein Argument entsprechend dem Verhältnis zwischen dem Radtransversalgeschwindigkeitswert ($V_{TW}$) und dem Radlängsgeschwindigkeitswert ($V_{LW}$) multipliziert mit minus eins.

3. Verfahren nach einem der vorstehenden Ansprüche, wobei das Merkmal des Bestimmens des Referenzquerkraftwerts ( $F_{T_{TR}}^{Zugmaschine,Ref}$ ) unter Verwendung des Zugmaschinen-Querkraftwerts ( $F_{T_{TR}}^{Zugmaschine}$ ) und des Zugmaschinen-Reifenquerkraftgrenzwerts ( $F_{T_{TR}}^{Reifen}$ ) das Einstellen der Referenzquerkraft auf den einen des Zugmaschinen-Querkraftwerts und des Zugmaschinen-Reifenquerkraftgrenzwerts, der den größten Absolutwert aufweist, umfasst.

4. Verfahren nach einem der vorstehenden Ansprüche, wobei der Zugmaschinen-Querkraftwertbestimmungsvorgang ferner umfasst:

- Erhalten eines Anhänger-Längsneigungswinkelwerts ($\Phi$), der den Neigungswinkel in der Anhänger-Längsrichtung des Bodens, der den Anhänger (14) trägt, angibt;

- Bestimmen eines Längsgravitationskraftwerts ( $F_{L_{TL}}^{Anhänger,Gravitation}$ ), der eine Längsgravitationskraft in der Anhänger-Längsrichtung angibt, die auf den Anhänger auf der Basis von mindestens dem Anhängermassenwert und dem Anhänger-Längsneigungswinkelwerts ausgeübt wird, und

- Bestimmen des Zugmaschinen-Querkraftwerts ( $F_{T_{TR}}^{Zugmaschine}$ ) unter Verwendung des Werts der Längsgravitationskraftwerts ( $F_{L_{TL}}^{Anhänger,Gravitation}$ ),und/oder

wobei dar Zugmaschinen-Querkraftwertbestimmungsvorgang ferner umfasst:

- Erhalten eines Anhänger-Längsverlangsamungswerts ($r_{L_{TL}}$), der eine Anhänger-Längsverlangsamung angibt, die auf den Anhänger (14) ausgeübt oder für diesen vorhergesagt wird;

- Bestimmen eines Längsträgheitskraftwerts ( $F_{L_{TL}}^{Anhänger,Trägheits}$ ), der eine Längsträgheitskraft in der Anhänger-Querrichtung angibt, die auf den Anhänger auf der Basis von mindestens dem Anhängermassenwert ($M^{Anhänger}$) und dem Anhänger-Längsverlangsamungswert ($r_{L_{TL}}$) ausgeübt wird, und

- Bestimmen des Zugmaschinen-Querkraftwerts ( $F_{T_{TR}}^{Zugmaschine}$ ) unter Verwendung des Längsträgheitskraftwerts ( $F_{L_{TL}}^{Anhänger,Trägheits}$ ).

5. Verfahren nach einem der vorstehenden Ansprüche, wobei der Zugmaschinen-Querkraftwertbestimmungsvorgang ferner umfasst:

- Bestimmen eines Querzentrifugalkraftwerts ( $F_{TTL}^{Anh\ddot{a}nger,Zentrifugal}$ ), der eine Zentrifugalkraft in der Anhänger-Querrichtung (T$_{TL}$) angibt, die auf den Anhänger auf der Basis von mindestens dem Anhänger-massenwert ($m^{Anh\ddot{a}nger}$) ausgeübt wird, und

- Bestimmen des Zugmaschinen-Querkraftwerts ( $F_{TTR}^{Zugmaschine}$ ) unter Verwendung des Querzentrifugal-kraftwerts ( $F_{TTL}^{Anh\ddot{a}nger,Zentrifugal}$ ) und/oder

- Erhalten eines Querneigungswinkelwerts ($\theta$), der den Neigungswinkel in der Anhänger-Querrichtung des Bodens angibt, der den Anhänger (14) trägt;

- Bestimmen eines Quergravitationskraftwerts ( $F_{TTL}^{Anh\ddot{a}nger,Gravitation}$ ), der eine Quergravitationskraft in der Anhänger-Querrichtung angibt, die auf den Anhänger auf der Basis von mindestens dem Anhängermassen-wert ($m^{Anh\ddot{a}nger}$) und dem Querneigungswinkelwert ($\theta$) ausgeübt wird, und

- Bestimmen des Zugmaschinen-Querkraftwerts ( $F_{TTR}^{Zugmaschine}$ ) unter Verwendung des Quergravitations-kraftwerts ( $F_{TTL}^{Anh\ddot{a}nger,Gravitation}$ ).

6. Verfahren nach einem der vorstehenden Ansprüche, wobei der Zugmaschinen-Querkraftwertbestimmungsvorgang ferner umfasst:

- Multiplizieren jedes Kraftwerts, der eine Kraft in der AnhängerLängsrichtung angibt, mit dem Sinus des Knickwinkelwerts ($\Psi$), und/oder
- Multiplizieren jedes Kraftwerts, der eine Kraft in der Anhänger-Querrichtung angibt, mit dem Kosinus des Knickwinkelwerts ($\Psi$).

7. Verfahren nach einem der vorstehenden Ansprüche, wobei die Zugmaschine (12) einen Satz von Radachsen umfasst, wobei der Satz von Radachsen mindestens eine Radachse umfasst und wobei jede Radachse mit einzelnen Rädern des Satzes von Zugmaschinenrädern verbunden ist, wobei das Verfahren das Durchführen des Folgenden für jede Radachse in dem Satz von Radachsen umfasst:

- auf der Basis des Anhänger-Querkraftwerts ( $F_{TTR}^{Anh\ddot{a}nger\ an\ Zugmaschine}$ ), Bestimmen eines Anhänger-Achsenquerkraftwerts ( $F_{TTR}^{Anh\ddot{a}nger\ an\ Zugmaschine,Achse}$ ), der eine Anhänger-Querkraft angibt, die auf die Radachse ausgeübt oder für diese vorhergesagt wird;
- Bestimmen eines Zugmaschinen-Achsenquerkraftgrenzwerts unter Verwendung eines Reifenmodells zum Bestimmen einer Reifenquerkraftgrenze, wobei mindestens eine Eigenschaft des Reifens für mindestens eines, vorzugsweise jedes des Rads oder der Räder, die mit der Radachse verbunden sind, berücksichtigt wird;
- Bestimmen eines Referenzachsenquerkraftwerts unter Verwendung des Anhänger-Achsenquerkraftwerts und des Zugmaschinen-Achsenquerkraftgrenzwerts;
- Bestimmen eines Horizontalachsenreibungskraftwerts, der eine mögliche Gesamthorizontalreibungskraft angibt, die zwischen dem Boden, der die Zugmaschine (12) trägt, und mindestens einem, vorzugsweise jedem des Rads oder der Räder, die mit der Radachse verbunden sind, erhältlich ist;
- Bestimmen eines Zugmaschinen-Achsenlängskraftschwellenwerts, unter Verwendung des Referenzachsenquerkraftwerts und des Horizontalachsenreibungskraftwerts, und

Summieren des Achsen-Zugmaschinen-Längskraftschwellenwerts ( $F_{LTR}^{ret,Schwelle,Achse}$ ) für jede Radachse in dem Satz von Radachsen, um den Zugmaschinen-Längskraftschwellenwert ( $F_{LTR}^{ret,Schwelle}$ ) zu erhalten wobei vorzugsweise der Schritt des Bestimmens des Anhänger-Achsenquerkraftwerts (

$F_{T_{TR}}^{Anhänger\ an\ Zugmaschine,Achse}$ ), der eine Anhänger-Querkraft angibt, die auf die Radachse ausgeübt oder für diese vorhergesagt wird, auf der Basis des Anhänger-Querkraftwerts ( $F_{T_{TR}}^{Anhänger\ an\ Zugmaschine}$ ) das Verwenden einer Momentgleichgewichtsgleichung unter Verwendung der folgenden Eingaben umfasst:

- den Anhänger-Querkraftwert ( $F_{T_{TR}}^{Anhänger\ an\ Zugmaschine}$ )
- eine Distanz ($l_f$, $l_r$), in der Zugmaschinen-Längsrichtung ($L_{TR}$), von jeder Radachse zu dem Schwerpunkt der Zugmaschine (12), und
- eine Distanz ($l_c$), in der Zugmaschinen-Längsrichtung ($L_{TR}$), von dem Verbindungspunkt (28) zu dem Schwerpunkt der Zugmaschine (12).

8. Verfahren nach einem der vorstehenden Ansprüche, wobei das Verfahren das Durchführen des Folgenden für mindestens eine Vielzahl, vorzugsweise für jedes einzelne, der Räder des Satzes von dem Satz von Zugmaschinenrädern umfasst:

- auf der Basis des Anhänger-Querkraftwerts ( $F_{T_{TR}}^{Anhänger\ an\ Zugmaschine}$ ), Bestimmen eines Anhänger-Radquerkraftwerts ( $F_{T_{TR}}^{Anhänger\ an\ Zugmaschine,Rad}$ ), der eine Anhänger-Querkraft angibt, die auf das Rad ausgeübt oder für dieses vorhergesagt wird;
- Bestimmen eines Zugmaschinen-Radquerkraftgrenzwerts unter Verwendung eines Reifenmodells zum Bestimmen einer Reifenquerkraftgrenze, wobei mindestens eine Eigenschaft des Reifens für das Rad berücksichtigt wird;
- Bestimmen eines Referenzradquerkraftwerts unter Verwendung des Anhänger-Radquerkraftwerts und des Zugmaschinen-Radquerkraftgrenzwerts;
- Bestimmen eines Horizontalradreibungskraftwerts, der eine mögliche Gesamthorizontalreibungskraft angibt, die zwischen dem Boden, der die Zugmaschine trägt, und mindestens einem, vorzugsweise jedem des Rads oder der Räder, die mit der Radachse verbunden sind, erhältlich ist;
- Bestimmen eines Zugmaschinen-Radlängskraftschwellenwerts unter Verwendung des Referenzradquerkraftwerts und des Horizontalradreibungskraftwerts, und

Summieren des Zugmaschinen-Radlängskraftschwellenwerts ( $F_{L_{TR}}^{ret,Schwelle,Rad}$ ) für jedes Rad in dem Satz von Radrädern, um den Zugmaschinen-Längskraftschwellenwert ( $F_{L_{TR}}^{ret,Schwelle}$ ), zu erhalten

wobei vorzugsweise der Schritt des Bestimmens des Anhänger-Radquerkraftwerts ( $F_{T_{TR}}^{Anhänger\ an\ Zugmaschine,Rad}$ ), der eine Anhänger-Querkraft angibt, die auf das Rad ausgeübt oder für dieses vorhergesagt wird, auf der auf der Basis des Anhänger-Querkraftwerts ( $F_{T_{TR}}^{Anhänger\ an\ Zugmaschine}$ ) das Verwenden einer Momentgleichgewichtsgleichung unter Verwendung der folgenden Eingaben umfasst:

- den Anhänger-Querkraftwert ( $F_{T_{TR}}^{Anhänger\ an\ Zugmaschine}$ );
- eine Distanz ($l_f$, $l_r$), in der Zugmaschinen-Längsrichtung ($L_{TR}$), von jedem von einer Vielzahl von Rädern, vorzugsweise von jedem Rad, in dem von dem Satz des Satzes von Zugmaschinenrädern zu dem Schwerpunkt der Zugmaschine (12), und
- eine Distanz ($l_c$), in der Zugmaschinen-Längsrichtung ($L_{TR}$), von dem Verbindungspunkt (28) zu dem Schwerpunkt der Zugmaschine (12).

9. Verfahren zum Bremsen einer Fahrzeugkombination (10), umfassend eine Zugmaschine (12) und einen Anhänger (14), wobei die Zugmaschine (12) eine Zugmaschinen-Bremsbaugruppe (16, 22, 24) für regeneratives Bremsen der Zugmaschine (12) umfasst, und der Anhänger (14) umfassend eine Anhänger-Bremsbaugruppe (26) zum Bremsen des Anhängers (14), das Verfahren umfassend:

- Bestimmen eines Zugmaschinen-Längskraftschwellenwerts ( $F_{LTR}^{ret,Schwelle}$ ) unter Verwendung des Verfahrens nach einem der vorstehenden Ansprüche:
- Betreiben der Zugmaschinen-Bremsbaugruppe (16, 22, 24), um eine Bremskraft bereitzustellen, die kleiner als oder gleich dem Zugmaschinen-Längskraftschwellenwert ist ( $F_{LTR}^{ret,Schwelle}$ ),
wobei das Verfahren vorzugsweise ferner umfasst:

- Erhalten eines Verlangsamungsanforderungswerts ($r_{req}$), der eine angeforderte Verlangsamung der Fahrzeugkombination (10) angibt;
- Bestimmen einer angeforderten Bremskraft ($F^{ret,request}$), die auf die Fahrzeugkombination auf der Basis des Verlangsamungsanforderungswerts ($r_{req}$) ausgeübt werden soll;
- als Reaktion darauf, dass die Bremskraft ($F^{ret,request}$) kleiner als oder gleich dem Zugmaschinen-Längskraftschwellenwert ( $F_{LTR}^{ret,Schwelle}$ ), ist, Betätigen der Zugmaschinen-Bremsbaugruppe (16, 22, 24), aber nicht der Anhänger-Bremsbaugruppe (26) zum Bremsen der Fahrzeugkombination,

wobei das Bestimmen einer angeforderten Bremskraft, die auf die Fahrzeugkombination ausgeübt werden soll, auf der Basis des Verlangsamungsanforderungswerts vorzugsweise ferner das Erhalten eines Zugmaschinenmassenwerts ($m^{Zugmaschine}$), der die aktuelle Masse der Zugmaschine (12) angibt, und eines Anhängermassenwerts ($m^{Anhänger}$), der die aktuelle Masse des Anhängers (14) angibt, umfasst.

10. Verfahren nach Anspruch 9, wobei das Bestimmen einer angeforderten Bremskraft, die auf die Fahrzeugkombination auf der Basis des Verlangsamungsanforderungswerts ($r_{req}$) ausgeübt werden soll, ferner das Bestimmen eines Anhänger-Längsneigungswinkelwerts (Φ), der den Neigungswinkel in der Anhängerlängsrichtung des Bodens angibt, der den Anhänger trägt, umfasst.

11. Verfahren nach einem der Ansprüche 9 bis 10, wobei das Bestimmen einer angeforderten Bremskraft, die auf die Fahrzeugkombination (10) auf der Basis des Verlangsamungsanforderungswerts ($r_{req}$) ausgeübt werden soll, ferner das Bestimmen eines Zugmaschinen-Längsneigungswinkelwerts, der den Neigungswinkel in der Zugmaschinen-Längsrichtung des Bodens angibt, der die Zugmaschine trägt, umfasst.

12. Computerprogramm, umfassend Programmcodemittel zum Durchführen des Verfahrens nach einem der vorstehenden Ansprüche, wenn das Programm auf einem Computer ausgeführt wird.

13. Computerlesbares Medium, das ein Computerprogramm trägt, umfassend Programmcodemittel zum Durchführen des Verfahrens nach einem der Ansprüche 1 bis 11, wenn das Programmprodukt auf einem Computer ausgeführt wird.

14. Steuereinheit (30), die konfiguriert ist, um das Verfahren nach einem der Ansprüche 1 bis 11 durchzuführen.

15. Fahrzeugkombination (10), umfassend eine Zugmaschine (12), einen Anhänger (14) und eine Steuereinheit (30) nach Anspruch 14.

**Revendications**

1. Procédé permettant de déterminer une valeur seuil de force longitudinale de tracteur ( $F_{LTR}^{ret,threshold}$ ) pour une force de ralentissement longitudinale de tracteur ( $F_{LTR}^{ret}$ ) qui peut être communiquée sur un tracteur (12) d'une combinaison de véhicules (10) comprenant ledit tracteur (12) et une remorque (14) pour ralentir ladite combinaison de véhicules,

ladite remorque (14) ayant une extension longitudinale de remorque dans une direction longitudinale de remorque ($L_{TL}$), une extension latérale de remorque dans une direction latérale de remorque ($T_{TL}$) et une extension verticale de remorque dans une direction verticale de remorque ($V_{TL}$), dans lequel ladite direction longitudinale de remorque ($L_{TL}$) correspond à une direction de déplacement prévue de ladite remorque (14) lorsque ladite combinaison de véhicules (10) se déplace tout droit, ladite direction verticale de remorque ($V_{TL}$) correspond à une direction d'une normale à une surface plane supportant la remorque (14) et ladite direction latérale de remorque ($T_{TL}$) étant perpendiculaire à chacune de ladite direction longitudinale de remorque ($L_{TL}$) et ladite direction verticale de remorque ($V_{TL}$),

ledit tracteur (12) ayant une extension longitudinale de tracteur dans une direction longitudinale de tracteur ($L_{TR}$), une extension latérale de tracteur dans une direction latérale de tracteur ($T_{TR}$) et une extension verticale de tracteur dans une direction verticale de tracteur ($V_{TR}$), dans lequel ladite direction longitudinale de tracteur ($L_{TR}$) correspond à une direction de déplacement prévue dudit tracteur (12) lorsque ladite combinaison de véhicules (10) se déplace tout droit, ladite direction verticale de tracteur ($V_{TR}$) correspond à une direction d'une normale à une surface plane supportant le tracteur (12) et ladite direction latérale de tracteur ($T_{TR}$) étant perpendiculaire à chacune de ladite direction longitudinale de tracteur ($L_{TR}$) et de ladite direction verticale de tracteur ($V_{TR}$), dans lequel ladite force de ralentissement longitudinale de tracteur ( $F_{L_{TR}}^{ret}$ ) s'étend dans une direction parallèle à ladite direction longitudinale de tracteur ($L_{TR}$), ledit tracteur (12) comprenant un ensemble de roues de tracteur (18) adaptées pour venir en contact avec le sol supportant ledit tracteur (12), chaque roue dudit ensemble de roues de tracteur (18) comprenant un pneu, ledit procédé étant **caractérisé par** :

- la détermination d'une valeur de force latérale de tracteur ( $F_{T_{TR}}^{tractor}$ ), indiquant une force latérale de tracteur exercée ou prédite sur ledit tracteur (12), à l'aide d'une procédure de détermination de valeur de force latérale de tracteur comprenant :

- l'obtention d'une valeur de masse de remorque ($m^{trailer}$) indiquant la masse actuelle de ladite remorque (14) ;
- l'obtention d'une valeur de fonctionnement de remorque indiquant l'état de fonctionnement actuelle ou prévue de ladite remorque (14) ;
- la détermination d'une valeur d'angle d'articulation ($\Psi$) indiquant un angle d'articulation actuel entre ladite direction longitudinale de tracteur ($L_{TR}$) et ladite direction longitudinale de remorque ($L_{TL}$), et

- la détermination de ladite valeur de force latérale de tracteur ( $F_{T_{TR}}^{tractor}$ ) à l'aide de ladite valeur de masse de remorque ($m^{trailer}$), de ladite valeur de fonctionnement de remorque et de ladite valeur d'angle d'articulation ($\Psi$) ;

- la détermination d'une valeur limite de force latérale de pneu de tracteur ( $F_{T_{TR}}^{tire}$ ) à l'aide d'un modèle de pneu pour déterminer une limite de force latérale de pneu, en tenant compte d'au moins une caractéristique du pneu, pour chaque roue d'au moins un sous-ensemble dudit ensemble de roues de tracteur (18) ;

- la détermination d'une valeur de force latérale de référence ( $F_{T_{TR}}^{tractor,ref}$ ) à l'aide de ladite valeur de force latérale de tracteur ( $F_{T_{TR}}^{tractor}$ ) et de ladite valeur limite de force latérale de pneu de tracteur ( $F_{T_{TR}}^{tire}$ );

- la détermination d'une valeur de force de frottement horizontale ( $F_{total}^{tractor}$ ) indiquant une éventuelle force de frottement horizontale totale qui peut être obtenue entre ledit sol supportant ledit tracteur (12) et ledit ensemble de roues de tracteur (18), et

- la détermination de ladite valeur seuil de force longitudinale de tracteur ( $F_{L_{TR}}^{ret,threshold}$ ) à l'aide de ladite valeur de force latérale de référence ( $F_{T_{TR}}^{tractor,ref}$ ) et de ladite valeur de force de frottement horizontale ( $F_{total}^{tractor}$ ).

2. Procédé selon la revendication 1, dans lequel chaque roue dudit ensemble de roues de tracteur (18) a une direction longitudinale de roue ($L_W$) parallèle à ladite direction longitudinale de tracteur ($L_{TR}$) lorsque ladite combinaison de véhicules (10) se déplace tout droit, ainsi qu'une direction transversale de roue (Tw) parallèle à ladite direction transversale de tracteur ($T_{TR}$) lorsque ladite combinaison de véhicules (10) se déplace en ligne droite, dans lequel ladite caractéristique de détermination de ladite valeur limite de force latérale de pneu de tracteur ( $F_{T_{TR}}^{tire}$ ) comprend ce qui suit pour chaque roue d'au moins un sous-ensemble dudit ensemble de roues de tracteur :

- la détermination d'une valeur de vitesse longitudinale de roue ($V_{LW}$) indiquant une vitesse dans ladite direction longitudinale de roue ($L_W$) de ladite roue,
- la détermination d'une valeur de vitesse transversale de roue ($V_{TW}$) indiquant une vitesse dans ladite direction transversale de roue ($T_W$) de ladite roue,
- la détermination d'une valeur seuil de glissement ($\sigma_{sl}$), indiquant un seuil de glissement au-dessus duquel ladite roue est censée glisser par rapport au sol supportant ledit tracteur (12), et
- l'utilisation de ladite valeur de vitesse longitudinale de roue ($V_{LW}$), de ladite valeur de vitesse transversale de roue ($V_{TW}$) et de ladite valeur seuil de glissement ($\sigma_{sl}$) pour déterminer une partie de valeur limite de force latérale de pneu de tracteur spécifique à la roue faisant partie de ladite valeur limite de force latérale de pneu de tracteur ( $F_{T_{TR}}^{tire}$ ),

dans lequel de préférence ladite roue a une direction verticale de roue ($V_W$) perpendiculaire à chacune parmi ladite direction longitudinale de roue ($L_W$) et ladite direction transversale de roue ($T_W$), dans lequel ladite caractéristique de détermination de ladite valeur seuil de glissement comprend l'utilisation d'au moins ce qui suit :

- une valeur de contact ($I_a$) proportionnelle à une distance, dans ladite direction longitudinale de roue, le long de laquelle il est déterminé qu'un contact entre ladite roue et le sol supportant ledit tracteur (12) est établi ;
- une valeur de rigidité ($C_p$) indiquant un coefficient de rigidité du pneu de ladite roue ;
- une valeur de force verticale ($F_{VW}$) indiquant une force, dans ladite direction verticale de roue ($V_W$), communiquée sur ladite roue, et
- une valeur de frottement ($\mu$) indiquant le frottement entre la roue et le sol supportant ledit tracteur (12),

dans lequel de préférence ladite caractéristique de détermination de ladite valeur limite de force latérale de pneu de tracteur comprend en outre ce qui suit pour chaque roue d'au moins un sous-ensemble dudit ensemble de roues de tracteur :

- la détermination d'une valeur de glissement longitudinal (K), indiquant un glissement dans ladite direction longitudinale de roue ($L_W$), à l'aide de ladite valeur de vitesse longitudinale de roue ($V_{LW}$) et d'un produit obtenu en multipliant le rayon de roulement effectif ($R_e$) de ladite roue par une valeur de vitesse angulaire ($\omega$) indiquant une vitesse angulaire actuelle de ladite roue,

dans lequel de préférence ladite caractéristique de détermination de ladite valeur limite de force latérale de pneu de tracteur comprend en outre ce qui suit pour chaque roue d'au moins un sous-ensemble dudit ensemble de roues de tracteur :

- la détermination d'une valeur d'angle de glissement ($\alpha$) à l'aide de ladite valeur de vitesse longitudinale de roue ($V_{LW}$) et de ladite valeur de vitesse transversale de roue ($V_{TW}$), de préférence en divisant ladite valeur de vitesse transversale de roue ($v_{TW}$) par ladite valeur de vitesse longitudinale de roue ($V_{LW}$), plus préférablement en calculant l'arc tangente pour un argument correspondant au rapport entre ladite valeur de vitesse transversale de roue ($V_{TW}$) et ladite valeur de vitesse longitudinale de roue ($V_{LW}$) multipliée par moins un.

**3.** Procédé selon l'une quelconque des revendications précédentes, dans lequel ladite caractéristique de détermination de ladite valeur de force latérale de référence ( $F_{T_{TR}}^{tractor,ref}$ ) à l'aide de ladite valeur de force latérale de tracteur ( $F_{T_{TR}}^{tractor}$ ) et de ladite valeur limite de force latérale de pneu de tracteur ( $F_{T_{TR}}^{tire}$ ) comprend le réglage de ladite force latérale de référence pour qu'elle soit égale à l'une parmi ladite valeur de force latérale de tracteur et ladite valeur limite de force latérale de pneu de tracteur ayant la valeur absolue la plus élevée.

**4.** Procédé selon l'une quelconque des revendications précédentes, dans lequel ladite procédure de détermination de valeur de force latérale de tracteur comprend en outre :

- l'obtention d'une valeur d'angle d'inclinaison de remorque longitudinal ($\Phi$) indiquant l'angle d'inclinaison, dans ladite direction longitudinale de remorque, du sol supportant ladite remorque (14) ;

- la détermination d'une valeur de force de gravité longitudinale ( $F_{LTL}^{trailer,gravity}$ ) indiquant une force de gravité longitudinale, dans ladite direction longitudinale de remorque, exercée sur ladite remorque sur la base au moins de ladite valeur de masse de remorque et de ladite valeur d'angle d'inclinaison de remorque longitudinal, et

- la détermination de ladite valeur de force latérale de tracteur ( $F_{TTR}^{tractor}$ ) à l'aide de ladite valeur de force de gravité longitudinale ( $F_{LTL}^{trailer,gravity}$ ), et/ou dans lequel ladite procédure de détermination de valeur de force latérale de tracteur comprend en outre :

- l'obtention d'une valeur de ralentissement longitudinal de remorque ($r_{LTL}$) indiquant un ralentissement longitudinal de remorque exercé ou prédit sur ladite remorque (14) ;

- la détermination d'une valeur de force d'inertie longitudinale ( $F_{LTL}^{trailer,inertial}$ ) indiquant une force d'inertie longitudinale, dans ladite direction latérale de remorque, exercée sur ladite remorque sur la base au moins de ladite valeur de masse de remorque ($m^{trailer}$) et de ladite valeur de ralentissement de remorque longitudinal ($r_{LTL}$), et

- la détermination de ladite valeur de force latérale de tracteur ( $F_{TTR}^{tractor}$ ) à l'aide de ladite valeur de force d'inertie longitudinale ( $F_{LTL}^{trailer,inertial}$ ).

**5.** Procédé selon l'une quelconque des revendications précédentes, dans lequel ladite procédure de détermination de valeur de force latérale de tracteur comprend en outre :

- la détermination d'une valeur de force centrifuge latérale ( $F_{TTL}^{trailer,centrifugal}$ ) indiquant une force centrifuge, dans ladite direction latérale de remorque ($T_{TL}$), exercée sur ladite remorque sur la base d'au moins ladite valeur de masse de remorque ($m^{trailer}$) et

- la détermination de ladite valeur de force latérale de tracteur ( $F_{TTR}^{tractor}$ ) à l'aide de ladite valeur de force centrifuge latérale ( $F_{TTL}^{trailer,centrifugal}$ ), et/ou

- l'obtention d'une valeur d'angle d'inclinaison latérale ($\theta$) indiquant l'angle d'inclinaison, dans ladite direction latérale de remorque, du sol supportant ladite remorque (14) ;

- la détermination d'une valeur de force de gravité latérale ( $F_{TTL}^{trailer,gravity}$ ) indiquant une force de gravité latérale, dans ladite direction latérale de remorque, exercée sur ladite remorque sur la base au moins de ladite valeur de masse de remorque ($m^{trailer}$) et de ladite valeur d'angle d'inclinaison latéral ($\theta$), et

- la détermination de ladite valeur de force latérale de tracteur ( $F_{TTR}^{tractor}$ ) à l'aide de ladite valeur de force de gravité latérale ( $F_{TTL}^{trailer,gravity}$ ).

**6.** Procédé selon l'une quelconque des revendications précédentes, dans lequel ladite procédure de détermination de valeur de force latérale de tracteur comprend en outre :

- la multiplication de chaque valeur de force indiquant une force, dans ladite direction longitudinale de remorque, par le sinus de ladite valeur d'angle d'articulation ($\Psi$), et/ou
- la multiplication de chaque valeur de force indiquant une force, dans ladite direction latérale de remorque, par le cosinus de ladite valeur d'angle d'articulation (Ψ).

7. Procédé selon l'une quelconque des revendications précédentes, dans lequel ledit tracteur (12) comprend un ensemble d'essieux, dans lequel ledit ensemble d'essieux comprend au moins un essieu et dans lequel chaque essieu est relié à des roues individuelles dudit ensemble de roues de tracteur, dans lequel ledit procédé comprend la réalisation de ce qui suit pour chaque essieu dans ledit ensemble d'essieux :

- sur la base de ladite valeur de force latérale de remorque ( $F_{T_{TR}}^{trailer2tractor}$ ), la détermination d'une valeur de force latérale d'essieu de remorque ( $F_{T_{TR}}^{trailer2tractor,axle}$ ) indiquant une force latérale de remorque exercée ou prédite sur ledit essieu ;
- la détermination d'une valeur limite de force latérale d'essieu de tracteur à l'aide d'un modèle de pneu pour déterminer une limite de force latérale de pneu, en tenant compte d'au moins une caractéristique du pneu, pour au moins une, de préférence chacune de la ou des roues reliées audit essieu ;
- la détermination d'une valeur de force latérale d'essieu de référence à l'aide de ladite valeur de force latérale d'essieu de remorque et de ladite valeur limite de force latérale d'essieu de tracteur ;
- la détermination d'une valeur de force de frottement d'essieu horizontale indiquant une force de frottement horizontale totale possible pouvant être obtenue entre ledit sol supportant ledit tracteur (12) et au moins une, de préférence chacune de la ou des roues reliées audit essieu ;
- la détermination d'une valeur seuil de force longitudinale d'essieu de tracteur à l'aide de ladite valeur de force latérale d'essieu de référence et ladite valeur de force de frottement d'essieu horizontale, et

la somme de la valeur seuil de force longitudinale de tracteur d'essieu ( $F_{L_{TR}}^{ret,threshold,axle}$ ) pour chaque essieu dans ledit ensemble d'essieux afin d'obtenir ladite valeur seuil de force longitudinale de tracteur ( $F_{L_{TR}}^{ret,threshold}$ ),

dans lequel de préférence l'étape de détermination de ladite valeur de force latérale d'essieu de remorque ( $F_{T_{TR}}^{trailer2tractor,axle}$ ) indiquant une force latérale de remorque exercée ou prédite sur ledit essieu sur la base de ladite valeur de force latérale de remorque ( $F_{T_{TR}}^{trailer2tractor}$ ) comprend l'utilisation d'une équation d'équilibre de moment à l'aide des entrées suivantes :

- ladite valeur de force latérale de remorque ( $F_{T_{TR}}^{trailer2tractor}$ );
- une distance ($I_f$, $I_r$), dans la direction longitudinale de tracteur ($L_{TR}$), entre chaque essieu et le centre de gravité dudit tracteur (12), et
- une distance ($I_c$), dans la direction longitudinale de tracteur ($L_{TR}$), entre le point de liaison (28) et le centre de gravité du tracteur (12).

8. Procédé selon l'une quelconque des revendications précédentes, dans lequel ledit procédé comprend la réalisation de ce qui suit pour au moins une pluralité, de préférence pour chacune, des roues dudit ensemble d'ensemble de roues de tracteur :

- sur la base de ladite valeur de force latérale de remorque ( $F_{T_{TR}}^{trailer2tractor}$ ), la détermination d'une valeur de force latérale d'essieu de remorque ( $F_{T_{TR}}^{trailer2tractor,wheel}$ ) indiquant une force latérale de remorque exercée ou prédite sur ladite roue ;
- la détermination d'une valeur limite de force latérale de roue de tracteur à l'aide d'un modèle de pneu pour déterminer une limite de force latérale de pneu, en tenant compte d'au moins une caractéristique du pneu, pour ladite roue ;
- la détermination d'une valeur de force latérale de roue de référence à l'aide de ladite valeur de force latérale de roue de remorque et de ladite valeur limite de force latérale de roue de tracteur ;
- la détermination d'une valeur de force de frottement de roue horizontale indiquant une force de frottement horizontale totale possible pouvant être obtenue entre ledit sol supportant ledit tracteur et au moins une, de préférence chacune, de la ou des roues reliées à ladite roue ;
- la détermination d'une valeur seuil de force longitudinale de roue de tracteur à l'aide de ladite valeur de force latérale de roue de référence et ladite valeur de force de frottement de roue horizontale, et

la somme de la valeur seuil de force longitudinale de tracteur de roue ( $F_{L_{TR}}^{ret,threshold,wheel}$ )

pour chaque roue dans ledit ensemble de roues de roues afin d'obtenir ladite valeur seuil de force longitudinale de tracteur ( $F_{L_{TR}}^{ret,threshold}$ ),

dans lequel de préférence l'étape de détermination de ladite valeur de force latérale de roue de remorque (

$F_{T_{TR}}^{trailer2tractor,wheel}$ ) indiquant une force latérale de remorque exercée ou prédite sur ladite roue sur la sur la base de ladite valeur de force latérale de remorque $F_{T_{TR}}^{trailer2tractor}$ comprend l'utilisation

d'une équation d'équilibre de moment à l'aide des entrées suivantes :

    - ladite valeur de force latérale de remorque $F_{T_{TR}}^{trailer2tractor}$ ;
    - une distance ($l_f$, $l_r$), dans la direction longitudinale de tracteur ($L_{TR}$), de chaque roue d'une pluralité de roues, de préférence de chaque roue, dans ledit dudit ensemble d'ensemble de roues de tracteur vers le centre de gravité dudit tracteur (12), et
    - une distance ($l_c$), dans la direction longitudinale de tracteur ($L_{TR}$), entre le point de liaison (28) et le centre de gravité du tracteur (12).

9. Procédé permettant de freiner une combinaison de véhicules (10) comprenant un tracteur (12) et une remorque (14), ledit tracteur (12) comprend un ensemble frein de tracteur (16, 22, 24) pour le freinage par récupération dudit tracteur (12) et ladite remorque (14) comprenant un ensemble frein de remorque (26) pour freiner ladite remorque (14), ledit procédé comprenant :

    - la détermination d'une valeur seuil de force longitudinale de tracteur ( $F_{L_{TR}}^{ret,threshold}$ ) à l'aide du procédé selon l'une quelconque des revendications précédentes :

        - l'actionnement dudit ensemble frein de tracteur (16, 22, 24) de manière à fournir une force de freinage inférieure ou égale à ladite valeur seuil de force longitudinale de tracteur ( $F_{L_{TR}}^{ret,threshold}$ ),

dans lequel ledit procédé comprend en outre de préférence :

        - l'obtention d'une valeur de demande de ralentissement ($r_{req}$) indiquant un ralentissement demandé de ladite combinaison de véhicules (10) ;
        - la détermination d'une force de freinage demandée ($F^{ret,request}$) à exercer sur ladite combinaison de véhicules sur la base de ladite valeur de demande de ralentissement ($r_{req}$) ;
        - en réponse à ladite force de freinage ($F^{ret,request}$) étant inférieure ou égale à ladite valeur seuil de force longitudinale de tracteur ( $F_{L_{TR}}^{ret,threshold}$ ), , l'actionnement dudit ensemble frein de tracteur (16, 22, 24) mais pas dudit ensemble frein de remorque (26) pour freiner ladite combinaison de véhicules,

dans lequel la détermination d'une force de freinage demandée à exercer sur ladite combinaison de véhicules sur la base de ladite valeur de demande de ralentissement comprend en outre de préférence l'obtention d'une valeur de masse de tracteur ($m^{tractor}$) indiquant la masse actuelle dudit tracteur (12) et une valeur de masse de remorque ($m^{trailer}$) indiquant la masse actuelle de ladite remorque (14).

10. Procédé selon la revendication 9, dans lequel la détermination d'une force de freinage demandée à exercer sur ladite combinaison de véhicules sur la base de ladite valeur de demande de ralentissement ($r_{req}$) comprend en outre la détermination d'une valeur d'angle d'inclinaison longitudinale de remorque ($\Phi$) indiquant l'angle d'inclinaison, dans ladite direction longitudinale de remorque, du sol supportant ladite remorque.

11. Procédé selon l'une quelconque des revendications 9 à 10, dans lequel la détermination d'une force de freinage demandée à exercer sur ladite combinaison de véhicules (10) sur la base de ladite valeur de demande de ralentissement ($r_{req}$) comprend en outre la détermination d'une valeur d'angle d'inclinaison longitudinale de tracteur indiquant l'angle d'inclinaison, dans ladite direction longitudinale de tracteur, du sol supportant ledit tracteur.

12. Programme informatique comprenant un moyen de code de programme destiné à réaliser le procédé selon l'une quelconque des revendications précédentes lorsque ledit programme est exécuté sur un ordinateur.

13. Support lisible par ordinateur contenant un programme informatique comprenant un moyen de code de programme permettant d'effectuer le procédé selon l'une quelconque des revendications 1 à 11 lorsque ledit produit de programme est exécuté sur un ordinateur.

14. Unité de commande (30) configurée pour effectuer le procédé selon l'une quelconque des revendications 1 à 11.

15. Combinaison de véhicules (10) comprenant un tracteur (12), une remorque (14) et une unité de commande (30) selon la revendication 14.

Fig. 1

Fig. 2

Fig. 3a

Fig. 3b

EP 4 543 719 B1

Fig. 4

EP 4 543 719 B1

Fig. 5

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022106004 A1

- US 5411322 A